# EUROPEAN PATENT APPLICATION

(11) **EP 4 495 181 A1**
(43) Date of publication of application: **22.01.2025**
(21) Application number: 23781069.2
(22) Date of filing: 31.03.2023
(51) Int. Cl.: C08L 27/18, C08K 3/013, C08L 27/12

(54) **FLUORORESIN COMPOSITION AND MOLDED BODY**

(30) Priority: 31.03.2022 JP 2022058838; 30.09.2022 JP 2022157682
(71) Applicant: DAIKIN INDUSTRIES, LTD., Osaka-shi, Osaka 530-0001 (JP)
(72) Inventor: MUKAE, Hirofumi, Osaka-Shi, Osaka 530-0001 (JP); NAKAUE, Ayane, Osaka-Shi, Osaka 530-0001 (JP); KISHIKAWA, Yosuke, Osaka-Shi, Osaka 530-0001 (JP); YAMANAKA, Taku, Osaka-Shi, Osaka 530-0001 (JP); KATO, Taketo, Osaka-Shi, Osaka 530-0001 (JP); ISHII, Kenji, Osaka-Shi, Osaka 530-0001 (JP)
(74) Representative: Hoffmann Eitle
(86) International application number: PCT/JP2023/013572
(87) International publication number: WO 2023/191061

(57) **Abstract**

The disclosure aims to provide a fluororesin composition having excellent tensile properties and excellent handleability while containing a fluororesin having a history of being heated to a temperature equal to or higher than the melting point thereof and a molded article obtainable from the fluororesin composition. The disclosure relates to a non-melt-flowable fluororesin composition containing: a non-melt-flowable fluororesin A having a history of being heated to a temperature equal to or higher than a melting point thereof; a fluororesin B including at least one selected from the group consisting of a melt-flowable fluororesin and a non-melt-flowable fluororesin having no history of being heated to a temperature equal to or higher than a melting point thereof; and a filler.

## Description

### TECHNICAL FIELD

The disclosure relates to fluororesin compositions and molded articles.

### BACKGROUND ART

Polytetrafluoroethylene (PTFE) having a history of being heated to a temperature equal to or higher than the melting point thereof for processing such as molding fails to provide sufficient physical properties when it is directly reused as molding material. Thus, only some of such PTFE can be recycled in applications involving molding.

Patent Literature 1 and Patent Literature 2 disclose techniques relating to recycling of PTFE pulverized after firing or of heated PTFE.

### CITATION LIST

### - Patent Literature

Patent Literature 1: WO 2019/244433
Patent Literature 2: JP 2006-70233 A

### SUMMARY OF INVENTION

### - Technical Problem

The disclosure aims to provide a fluororesin composition having excellent tensile properties and excellent handleability while containing a fluororesin having a history of being heated to a temperature equal to or higher than the melting point thereof and a molded article obtainable from the fluororesin composition.

### - Solution to Problem

The disclosure (1) relates to a non-melt-flowable fluororesin composition containing:
a non-melt-flowable fluororesin A having a history of being heated to a temperature equal to or higher than a melting point thereof;
a fluororesin B including at least one selected from the group consisting of a melt-flowable fluororesin and a non-melt-flowable fluororesin having no history of being heated to a temperature equal to or higher than a melting point thereof; and
a filler.

The disclosure (2) relates to the fluororesin composition according to the disclosure (1), wherein the fluororesin composition has one or more melting points within a temperature range lower than 333°C and one or more melting points within a temperature range from 333°C to 360°C.

The disclosure (3) relates to the fluororesin composition according to the disclosure (1) or (2), wherein the fluororesin composition contains a tetrafluoroethylene unit and a modifying monomer unit based on a modifying monomer copolymerizable with tetrafluoroethylene.

The disclosure (4) relates to the fluororesin composition according to the disclosure (3), wherein the modifying monomer unit is present in an amount of 1.0% by mass or less of all polymerized units of the fluororesin composition.

The disclosure (5) relates to the fluororesin composition according to any one of the disclosures (1) to (4), wherein the fluororesin A includes polytetrafluoroethylene.

The disclosure (6) relates to the fluororesin composition according to any one of the disclosures (1) to (5), wherein the melt-flowable fluororesin has a melt flow rate of 0.25 g/10 min or higher.

The disclosure (7) relates to the fluororesin composition according to any one of the disclosures (1) to (6), wherein the melt-flowable fluororesin includes a fluororesin having a melting point of 320°C or lower.

The disclosure (8) relates to the fluororesin composition according to any one of the disclosures (1) to (7), further containing a non-melt-flowable fluororesin C including a portion having no history of being heated to a temperature equal to or higher than a melting point thereof, wherein the fluororesin B includes the melt-flowable fluororesin.

The disclosure (9) relates to the fluororesin composition according to any one of the disclosures (1) to (8), wherein the fluororesin composition has an apparent density of 0.40 g/ml or higher.

The disclosure (10) relates to the fluororesin composition according to any one of the disclosures (1) to (9), wherein the fluororesin composition has an angle of repose of smaller than 40°.

The disclosure (11) relates to the fluororesin composition according to any one of the disclosures (1) to (10), wherein the fluororesin composition has an average secondary particle size of 5 to 700 µm.

The disclosure (12) relates to the fluororesin composition according to any one of the disclosures (1) to (11), wherein particles of the fluororesin A have a smaller maximum linear length than particles of the fluororesin **B.**

The disclosure (13) relates to the fluororesin composition according to any one of the disclosures (1) to (12), wherein the filler includes at least one selected from the group consisting of glass fiber, glass bead, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

The disclosure (14) relates to the fluororesin composition according to any one of the disclosures (1) to (13), wherein the filler includes an electrically conductive filler.

The disclosure (15) relates to the fluororesin composition according to the disclosure (14), wherein the electrically conductive filler includes carbon black.

The disclosure (16) relates to the fluororesin composition according to any one of the disclosures (1) to (15), which is in the form of powder.

The disclosure (17) relates to the fluororesin composition according to any one of the disclosures (1) to (16), which is in the form of powder for compression molding or powder for ram extrusion molding.

The disclosure (18) relates to the fluororesin composition according to any one of the disclosures (1) to (17), wherein the fluororesin composition has a tensile strength at break of 8 MPa or higher.

The disclosure (19) relates to a molded article obtainable by compression-molding and firing, or ram extrusion molding the fluororesin composition according to any one of the disclosures (1) to (18).

The disclosure (20) relates to a fluororesin composition having one or more endothermic peaks within a range from 320°C to 335°C, wherein the fluororesin composition is to generate a residue in an amount of 15% by mass or less of the fluororesin composition in pyrolysis at 600°C in a nitrogen atmosphere, and the fluororesin composition exhibits electrical conductivity or a thermal conductivity of 0.3 W/m·K or higher.

The disclosure (21) relates to the fluororesin composition according to the disclosure (20), further having one or more endothermic peaks within a range higher than 335°C.

The disclosure (22) relates to the fluororesin composition according to the disclosure (20) or (21), further containing an electrically conductive filler or a thermally conductive filler.

The disclosure (23) relates to the fluororesin composition according to any one of the disclosures (20) to (22), wherein the fluororesin composition has a volume resistivity of 10⁴ Ω·cm or lower.

The disclosure (24) relates to the fluororesin composition according to any one of the disclosures (20) to (23), wherein the fluororesin composition has an apparent density of 0.40 g/ml or higher.

The disclosure (25) relates to the fluororesin composition according to any one of the disclosures (20) to (24), wherein the fluororesin composition has an angle of repose of smaller than 40°.

The disclosure (26) relates to the fluororesin composition according to any one of the disclosures (20) to (25), which is in the form of powder for ram extrusion molding.

The disclosure (27) relates to the fluororesin composition according to any one of the disclosures (20) to (26), wherein the fluororesin composition has a tensile strength at break of 8 MPa or higher.

The disclosure (28) relates to the fluororesin composition according to any one of the disclosures (1) to (18) and (20) to (27), which is not used for porous matter.

### - Advantageous Effects of Invention

The disclosure can provide a fluororesin composition having excellent tensile properties and excellent handleability while containing a fluororesin having a history of being heated to a temperature equal to or higher than the melting point thereof and a molded article obtainable from the fluororesin composition.

### DESCRIPTION OF EMBODIMENTS

The disclosure will be specifically described below.

The disclosure provides a non-melt-flowable fluororesin composition (hereafter, also referred to as a first fluororesin composition of the disclosure) containing: a non-melt-flowable fluororesin A having a history of being heated to a temperature equal to or higher than the melting point thereof; a fluororesin B including at least one selected from the group consisting of a melt-flowable fluororesin and a non-melt-flowable fluororesin having no history of being heated to a temperature equal to or higher than the melting point thereof; and a filler.

The first fluororesin composition of the disclosure has the above structure and therefore has excellent tensile properties (e.g., tensile strength at break, tensile strain at break) and excellent handleability (e.g., handleability when in the form of powder) while containing a fluororesin having a history of being heated to a temperature equal to or higher than the melting point thereof.

The fluororesin A has a history of being heated to a temperature equal to or higher than the melting point thereof. The heating may be heating for molding or heat treatment, for example.

The fluororesin A preferably has a melting point of not lower than 100°C but lower than 333°C, more preferably lower than 332°C, still more preferably lower than 331°C.

The lower limit thereof is more preferably 140°C, still more preferably not lower than 180°C, although not limited thereto.

The fluororesin A preferably has one or more melting points within a temperature range lower than 333°C. The temperature range lower than 333°C is more preferably lower than 332°C, still more preferably lower than 331°C, while preferably 100°C or higher, more preferably 140°C or higher, still more preferably 180°C or higher.

A melting point within the above range indicates that the resin has a history of being heated to a temperature equal to or higher than the melting point thereof.

The fluororesin A may also have a melting point within a temperature range of 333°C or higher.

The melting point of a fluororesin herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). In the case where one melting peak includes two or more local minimums, each minimum is defined as a melting point.

The fluororesin A is non-melt-flowable.

The term "non-melt-flowable" herein means that the melt flow rate (MFR) is lower than 0.25 g/10 min, preferably lower than 0.10 g/10 min, more preferably 0.05 g/10 min or lower.

The MFR herein is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE). For PTFE, the MFR is a value obtained by measurement under the same measurement conditions as for PFA.

Alternatively, a fluororesin may also be determined as being non-melt-flowable in the case where the thickness of a molded article prepared by compression-molding the fluororesin to provide a preformed article (non-fired molded article) and heating this preformed article at the melting point of the fluororesin or higher for one hour or longer is smaller than the thickness before heating by less than 20% or is greater than the thickness before heating.

The fluororesin A preferably includes polytetrafluoroethylene (PTFE). The PTFE may be a high molecular weight PTFE.

The PTFE as a fluororesin A may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; a (perfluoroalkyl)ethylene; and ethylene. One modifying monomer may be used or a plurality of modifying monomers may be used.

The perfluorovinyl ether may be, but is not limited to, an unsaturated perfluoro compound represented by the following formula (A):

CF₂=CF-ORf (A)

(wherein Rf is a perfluoro organic group). The term "perfluoroorganic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:
those represented by the formula (A) wherein Rf is a C4-C9 perfluoro(alkoxy alkyl) group;
those represented by the formula (A) wherein Rf is a group represented by the following formula: 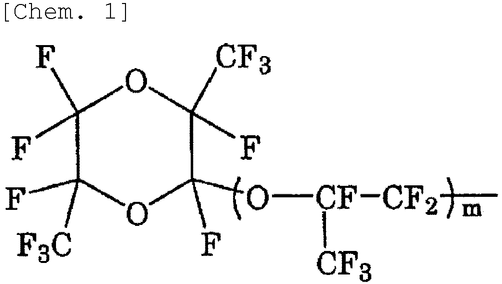 wherein m is 0 or an integer of 1 to 4; and
those represented by the formula (A) wherein Rf is a group represented by the following formula: 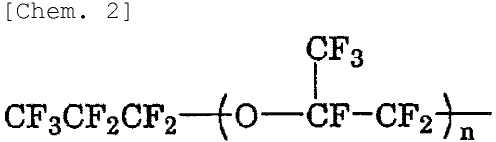 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

CF₂=CF-CF₂-ORf¹ (B)

wherein Rf¹ is a perfluoro organic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F_{5,} CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE as a fluororesin A preferably has a standard specific gravity (SSG) of 2.280 or lower, more preferably 2.10 or lower, while preferably 1.50 or higher, more preferably 1.60 or higher. The SSG is determined by the immersion method in conformity with ASTM D792 using a sample molded in conformity with ASTM D4895-89.

The PTFE as a fluororesin A commonly has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The PTFE (high molecular weight PTFE) as a fluororesin A preferably has a melting point of 310°C or higher, more preferably 320°C or higher, while preferably lower than 333°C. The PTFE may also have a melting point within a temperature range of 333°C or higher.

The first fluororesin composition of the disclosure may contain particles of the fluororesin A. The particles of the fluororesin A may be secondary particles of the fluororesin A.

The particles of the fluororesin A preferably have an average secondary particle size of 1 to 200 µm. The average secondary particle size is more preferably 5 µm or greater, still more preferably 10 µm or greater, while more preferably 150 µm or smaller, still more preferably 100 µm or smaller, further preferably 70 µm or smaller, particularly preferably 50 µm or smaller, most preferably 30 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A preferably have a D90 of 10 µm or greater, more preferably 30 µm or greater, still more preferably 50 µm or greater, while preferably 600 µm or smaller, more preferably 500 µm or smaller, still more preferably 400 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A are obtainable, for example, by compression-molding and firing a non-melt-flowable fluororesin having no history of being heated to a temperature equal to or higher than the melting point thereof and then pulverizing chips of the resulting molded article. The pulverization may be performed using a pulverizer, for example. The pulverization may include coarse pulverization and subsequent fine pulverization. The compression-molded article may have any shape. The firing may be performed at any temperature that is not lower than the melting point of the fluororesin. Any pulverizer may be used that can pulverize (preferably, finely pulverize) the chips. Examples thereof include an air jet mill, a hammer mill, a force mill, a millstone pulverizer, and a freeze pulverizer.

The particles of the fluororesin A are also obtainable, for example, by heating a powder of a non-melt-flowable fluororesin up to a temperature equal to or higher than the melting point thereof without compression molding, with the fluororesin having no history of being heated to a temperature equal to or higher than the melting point thereof, and then pulverizing the product using a pulverizer. The pulverizer is as described above.

The first fluororesin composition of the disclosure further contains a filler. This can lead to improved mechanical properties such as abrasion resistance and compressive creep resistance.

Examples of the filler include glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, nickel, aromatic polyester, polyimide, and polyphenylene sulfide. One or two or more of these may be used.

Preferred is at least one selected from the group consisting of glass fiber, carbon fiber, graphite, and bronze.

The filler is preferably contained in an amount of 0 to 80% by mass of the fluororesin composition. The amount is more preferably 1% by mass or more, still more preferably 5% by mass or more, further preferably 10% by mass or more, particularly preferably 12% by mass or more, while more preferably 70% by mass or less, still more preferably 60% by mass or less, further preferably 50% by mass or less, further more preferably 40% by mass or less, particularly preferably 30% by mass or less, most preferably 25% by mass or less.

An electrically conductive filler is also preferably used as the filler for the purpose of imparting electric conductivity to the molded article. In the case of using an electrically conductive filler as the filler, use of the fluororesin A and the fluororesin B in combination as the fluororesin was surprisingly found to improve the electrical conductivity as compared with use of the fluororesin B alone. Using the fluororesin A is likely to cause voids in the resulting molded article, allowing the electrically conductive filler to fill the voids to form a good electrically conductive path. This presumably improves the electrical conductivity.

Examples of the electrically conductive filler include carbon fillers and metal fillers.

Examples of the carbon fillers include carbon black, graphite, graphene sheet, carbon nanotube (CNT), PAN-based carbon fiber, and pitch-based carbon fiber. One or two or more of these may be used.

Examples of the metal fillers include metal powders (e.g., powders of iron, silver, copper, stainless steel, aluminum, and nickel), electrically conductive metal oxide powders (e.g., powder of zirconium oxide), and metal fibers, electrically conductive metal oxide fibers, and metal-coated synthetic fibers prepared using these metals.

A carbon filler and a metal filler may be used in combination.

The electrically conductive filler is preferably a carbon filler, more preferably carbon black. In the case of the first fluororesin composition of the disclosure, even carbon black, which is comparatively inexpensive and has excellent handleability, can impart good electrical conductivity.

The carbon black is preferably electrically conductive carbon black, and more preferably includes at least one selected from the group consisting of acetylene black, ketjen black, channel black, furnace black, lamp black, and thermal black, still more preferably at least one selected from the group consisting of acetylene black, ketjen black, and furnace black.

In order to achieve a molded article with still higher electrical conductivity, the carbon black preferably has an oil absorption of 100 ml/100 g or more, more preferably 120 ml/100 g or more, particularly preferably 150 ml/100 g or more.

The amount of the electrically conductive filler (preferably carbon black) in the first fluororesin composition of the disclosure is preferably 20% by mass or less, more preferably 15% by mass or less, still more preferably 10% by mass or less, particularly preferably 8.0% by mass or less, while preferably 1.0% by mass or more, more preferably 2.0% by mass or more of the fluororesin composition.

As above, even a comparatively small amount of electrically conductive filler can impart good electrical conductivity, which enables impartation of electrical conductivity without impairing the molding processability or the mechanical strength of the resulting molded article.

An electrically conductive filler such as CNT has an aspect ratio of 1000 or higher, which facilitates formation of a good electrically conductive network, leading to further reduction of the amount of the electrically conductive filler added. The amount of the electrically conductive filler having an aspect ratio of 1000 or higher is preferably 10% by mass or less, more preferably 5% by mass or less, still more preferably 3% by mass or less, particularly preferably 1% by mass or less, while preferably 0.0001% by mass or more, more preferably 0.001% by mass or more, still more preferably 0.01% by mass or more of the fluororesin composition.

In addition to the electrically conductive filler, an electrically non-conductive filler may be used together within a range that does not impair the performance. Examples of electrically non-conductive fillers include electrically non-conductive inorganic oxide fillers such as silica, silicate, clay, diatom earth, montmorillonite, talc, calcium carbonate, calcium silicate, barium sulfate, fatty acid calcium, titanium oxide, red iron oxide, boron nitride, aluminum nitride, magnesium oxide, and alumina, and electrically non-conductive resin fillers such as polyimide.

For the purpose of imparting thermal conductivity to the resulting molded article, a thermally conductive filler is also preferably used as the filler. In the case of using a thermally conductive filler as the filler, use of the fluororesin A and the fluororesin B in combination as the fluororesin was surprisingly found to improve the thermal conductivity as compared with use of the fluororesin B alone. Using the fluororesin A prevents the filler from penetrating the fluororesin A, allowing the thermally conductive filler to surround the fluororesin A to form a good thermally conductive path. This presumably improves the thermal conductivity.

Examples of the thermally conductive filler include boron nitride, aluminum nitride, magnesium oxide, and alumina. One or two or more of these may be used.

The thermally conductive filler preferably includes boron nitride. In the case of the first fluororesin composition of the disclosure, good thermal conductivity can be imparted.

The amount of the thermally conductive filler (preferably boron nitride) in the first fluororesin composition of the disclosure is preferably 20% by mass or less, more preferably 15% by mass or less, still more preferably 10% by mass or less, particularly preferably 8.0% by mass or less, while preferably 1.0% by mass or more, more preferably 2.0% by mass or more of the fluororesin composition.

As above, even a comparatively small amount of thermally conductive filler can impart good thermal conductivity, which enables impartation of thermal conductivity without impairing the molding processability or the mechanical strength of the resulting molded article.

The first fluororesin composition of the disclosure further contains a fluororesin B including at least one selected from the group consisting of a melt-flowable fluororesin and a non-melt-flowable fluororesin having no history of being heated to a temperature equal to or higher than the melting point thereof. The first fluororesin composition containing the fluororesin B has better tensile properties as compared with the case of using only the fluororesin A and the filler.

In a preferred embodiment, the fluororesin B includes a melt-flowable fluororesin.

The melt-flowable fluororesin has a MFR of 0.25 g/10 min or higher, preferably 0.50 g/10 min or higher, more preferably 1.00 g/10 min or higher. The MFR may be 100 g/10 min or lower and is preferably 80 g/10 min or lower.

The melt-flowable fluororesin preferably includes at least one selected from the group consisting of a fluororesin having a melting point of 320°C or lower and low molecular weight polytetrafluoroethylene (low molecular weight PTFE), and more preferably includes a fluororesin having a melting point of 320°C or lower.

The melt-flowable fluororesin is specifically described later.

In the case where the fluororesin B includes a melt-flowable fluororesin, the first fluororesin composition of the disclosure preferably further contains a non-melt-flowable fluororesin C including a portion having no history of being heated to a temperature equal to or higher than the melting point thereof. The presence of a fluororesin C can lead to much improved tensile properties.

The fluororesin C is specifically described later.

In a preferred embodiment, the fluororesin B includes a non-melt-flowable fluororesin having no history of being heated to a temperature equal to or higher than the melting point thereof. The non-melt-flowable fluororesin having no history of being heated to a temperature equal to or higher than the melting point thereof may be obtained either by suspension polymerization or emulsion polymerization.

The non-melt-flowable fluororesin having no history of being heated to a temperature equal to or higher than the melting point thereof is preferably PTFE. The PTFE may be a homopolymer of TFE or may be a modified PTFE containing 99.0% by mass or more of a polymerized unit based on TFE and 1.0% by mass or less of a polymerized unit based on a modifying monomer (modifying monomer unit).

The non-melt-flowable fluororesin having no history of being heated to a temperature equal to or higher than the melting point thereof is specifically described later.

In order to achieve much improved tensile properties, the amount of the fluororesin A in the first fluororesin composition of the disclosure is preferably 10 to 99.5% by mass of the fluororesin composition. The amount is more preferably 30% by mass or more, still more preferably 40% by mass or more, particularly preferably 50% by mass or more, while more preferably 99% by mass or less, still more preferably 95% by mass or less, further preferably 90% by mass or less, even more preferably 85% by mass or less, particularly preferably 80% by mass or less.

In order to achieve much improved tensile properties, the amount of the fluororesin B that is a melt-flowable fluororesin in the first fluororesin composition of the disclosure is preferably 0.5 to 30% by mass of the fluororesin composition. The amount is more preferably 1.0% by mass or more, still more preferably 3% by mass or more, further preferably 5% by mass or more, particularly preferably 7% by mass or more, while more preferably 25% by mass or less, still more preferably 20% by mass or less, further preferably 15% by mass or less, particularly preferably 10% by mass or less.

In order to achieve much improved tensile properties, the amount of the fluororesin B that is a non-melt-flowable fluororesin having no history of being heated to a temperature equal to or higher than the melting point thereof in the first fluororesin composition of the disclosure is preferably 10 to 90% by mass of the fluororesin composition. The amount is more preferably 15% by mass or more, still more preferably 20% by mass or more, further preferably more than 20% by mass, even more preferably 25% by mass or more, particularly preferably 30% by mass or more, while more preferably 80% by mass or less, still more preferably 70% by mass or less, further preferably 60% by mass or less, particularly preferably 50% by mass or less.

In order to achieve much improved tensile properties, the amount of the fluororesin C in the first fluororesin composition of the disclosure is preferably 0 to 80% by mass of the fluororesin composition. The amount is more preferably 1% by mass or more, still more preferably 10% by mass or more, further preferably 20% by mass or more, even more preferably 30% by mass or more, particularly preferably 40% by mass or more, while more preferably 75% by mass or less, still more preferably 70% by mass or less, further preferably 65% by mass or less, even more preferably 60% by mass or less, particularly preferably 50% by mass or less.

The total amount of the fluororesins A to C in the first fluororesin composition of the disclosure is preferably 80% by mass or more, more preferably 85% by mass or more, still more preferably 90% by mass or more, further preferably 95% by mass or more, particularly preferably 98% by mass or more of the fluororesin composition.

The first fluororesin composition of the disclosure is non-melt-flowable.

The first fluororesin composition of the disclosure may have a MFR of lower than 0.25 g/10 min, preferably lower than 0.10 g/10 min, more preferably 0.05 g/10 min or lower.

Alternatively, based on the thickness of a preformed article (non-fired molded article) prepared by compression-molding the first fluororesin composition of the disclosure and the thickness thereof after heating at a temperature equal to or higher than the melting point of the fluororesin composition for one hour or longer, the thickness after heating is preferably smaller than the thickness before heating by less than 20% or the thickness after heating is preferably greater than the thickness before heating because these cases means that the fluororesin composition is non-melt-flowable.

The first fluororesin composition of the disclosure preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin having a history of being heated to a temperature equal to or higher than the melting point thereof and a non-melt-flowable fluororesin having no history of being heated to a temperature equal to or higher than the melting point thereof.

The first fluororesin composition of the disclosure preferably contains a TFE unit and a modifying monomer unit based on a modifying monomer copolymerizable with TFE. The fluororesin composition may consist only of a TFE unit and a modifying monomer unit as the polymerized units.

In order to achieve much improved handleability and tensile properties, the modifying monomer unit is preferably contained in an amount of 1.0% by mass or less of all polymerized units of the fluororesin composition. The lower limit of the amount of the modifying monomer unit is preferably 0.00001% by mass, more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The first fluororesin composition of the disclosure preferably contains the TFE unit in an amount of 99.0% by mass or more of all polymerized units.

The amounts of the respective polymerized units of the first fluororesin composition of the disclosure can be calculated by appropriate combination of NMR, FT-IR, elemental analysis, and X-ray fluorescence analysis in accordance with the types of the monomers. In the case where the composition of materials is known, the amounts may be calculated from the composition of materials.

In order to achieve much better handleability, the first fluororesin composition of the disclosure preferably has an apparent density of 0.40 g/ml or higher, more preferably 0.42 g/ml or higher, still more preferably 0.45 g/ml or higher, particularly preferably 0.47 g/ml or higher. The upper limit may be, but is not limited to, 1.00 g/ml.

The apparent density is determined in conformity with JIS K6891.

In order to achieve excellent flowability and much better handleability, the first fluororesin composition of the disclosure preferably has an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The first fluororesin composition of the disclosure preferably has an average secondary particle size of 5 to 700 µm. The average secondary particle size is more preferably 10 µm or greater, still more preferably 20 µm or greater, while more preferably 600 µm or smaller, still more preferably 500 µm or smaller, particularly preferably 400 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In the first fluororesin composition of the disclosure, particles of the fluororesin A preferably have a smaller maximum linear length than particles of the fluororesin B. This relationship between the maximum linear lengths of the particles of the fluororesins A and B can lead to a high apparent density of the fluororesin composition, resulting in much improved handleability. This relationship can also eliminate the need for a change in the shape of the particles of the fluororesin A to achieve a greater maximum linear length, reducing the cost of producing the fluororesin composition.

The first fluororesin composition of the disclosure may be in any form, and is preferably in the form of powder.

The first fluororesin composition of the disclosure is preferably a fluororesin composition (also referred to as a fluororesin composition (1)) containing a non-melt-flowable fluororesin A having a history of being heated to a temperature equal to or higher than the melting point thereof, a melt-flowable fluororesin B1, and a filler.

The fluororesin composition (1) contains a melt-flowable fluororesin B1 and therefore has excellent tensile properties (e.g., tensile strength at break and tensile strain at break) while containing a fluororesin A having a history of being heated to a temperature equal to or higher than the melting point thereof. This effect is seemingly achieved by the fluororesin B1 filling interfaces between particles of the fluororesin A during molding.

The fluororesin A and the fluororesin B1 in the fluororesin composition (1) may be distinguished, for example, by a method including placing the fluororesin composition on a hot stage and microscopically observing the fluororesin composition while increasing the temperature at a rate of 5°C/min to check whether the particles maintain the shape, thereby determining the particles are of the fluororesin A or the fluororesin B1.

The fluororesin A and filler used in the fluororesin composition (1) may be those described above.

The fluororesin B1 is melt-flowable.

The term "melt-flowable" herein means that the MFR is 0.25 g/10 min or higher, preferably 0.50 g/10 min or higher, more preferably 1.00 g/10 min or higher. The MFR may be 100 g/10 min or lower and is preferably 80 g/10 min or lower.

Alternatively, based on the thickness of a preformed article (non-fired molded article) prepared by compression-molding a fluororesin and the thickness thereof after heating at a temperature equal to or higher than the melting point of the fluororesin for one hour or longer, the fluororesin may also be determined as being melt-flowable in the case where the thickness after heating is smaller than the thickness before heating by 20% or more.

The fluororesin B1 preferably has no history of being heated to a temperature equal to or higher than the melting point thereof.

The fluororesin B1 preferably has a melting point of 100°C to 340°C. The melting point is more preferably 140°C or higher, still more preferably 160°C or higher, while more preferably 336°C or lower, still more preferably 333°C or lower, further preferably 332°C or lower, even more preferably 331°C or lower, particularly preferably 330°C or lower.

The melting point of the fluororesin B1 can be measured by the aforementioned method. In the case where the amount of the fluororesin B1 is as small as not more than 5% by mass of the sum of the fluororesin A and the fluororesin B1, for example, the above method may fail to detect the melting point. In this case, the melting peak of the fluororesin B1 may be successfully detected by maintaining the fluororesin B1 at a temperature lower than the melting point thereof (preferably, a temperature lower than the melting point by 10°C or more) for 10 minutes, and then again increasing the temperature at a rate of 10°C/min. This method may be used to increase the temperature.

The fluororesin B1 preferably includes at least one selected from the group consisting of a fluororesin having a melting point of 320°C or lower and low molecular weight polytetrafluoroethylene (low molecular weight PTFE), and is more preferably a fluororesin having a melting point of 320°C or lower.

The fluororesin B1 is preferably a perfluoro resin.

Examples of the fluororesin having a melting point of 320°C or lower include a tetrafluoroethylene (TFE)/perfluoro(alkyl vinyl ether) (PAVE) or perfluoro(alkyl allyl ether) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, an Et/CTFE copolymer, polyvinyl fluoride (PVF), polyvinylidene fluoride (PVdF), a vinylidene fluoride (VdF)/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, and a VdF/PAVE/TFE copolymer. Preferred is at least one selected from the group consisting of PFA, FEP, and ETFE, more preferred is at least one selected from the group consisting of PFA and FEP, and still more preferred is PFA.

The PFA contains a TFE unit and a PAVE unit or perfluoro(alkyl allyl ether) unit. Examples of the PAVE include monomers represented by the formula (A) wherein Rf is a C1-C10 perfluoroalkyl group. Examples of the perfluoro(alkyl allyl ether) include monomers represented by the formula (B) wherein Rf¹ is a C1-C10 perfluoroalkyl group.

The PFA is preferably, but not limited to, a copolymer in which the mole ratio of the TFE unit to the PAVE unit or perfluoro(alkyl allyl ether) unit ((TFE unit)/(PAVE unit or perfluoro(alkyl allyl ether) unit)) is not smaller than 70/30 but smaller than 99/1. The mole ratio is more preferably 70/30 or higher and 98.9/1.1 or lower, still more preferably 80/20 or higher and 98.9/1.1 or lower. The PFA is also preferably a copolymer containing a polymerized unit derived from a monomer copolymerizable with TFE and PAVE or perfluoro(alkyl allyl ether) in an amount of 0.1 to 10 mol% (i.e., the TFE unit and the PAVE unit or perfluoro(alkyl allyl ether) unit represent 90 to 99.9 mol% in total), more preferably 0.1 to 5 mol%, particularly preferably 0.2 to 4 mol%.

Examples of the monomer copolymerizable with TFE and PAVE or perfluoro(alkyl allyl ether) include: HFP; a vinyl monomer represented by the formula (I): CZ¹Z²=CZ³(CF₂)ₙZ⁴ (wherein Z¹, Z², and Z³ are the same as or different from each other and are each a hydrogen atom or a fluorine atom; Z⁴ is a hydrogen atom, a fluorine atom, or a chlorine atom; and n is an integer of 2 to 10); an alkyl perfluorovinyl ether derivative represented by the formula (II): CF₂=CF-OCH₂-Rf² (wherein Rf² is a C1-C5 perfluoroalkyl group); and an allyl ether monomer represented by the formula (III): CZ⁵Z⁶=CZ⁷-CZ⁸Z⁹-O-Rf³ (wherein Z⁵, Z⁶, and Z⁷ are the same as or different from each other and are each a hydrogen atom, a chlorine atom, or a fluorine atom; Z⁸ and Z⁹ are each a hydrogen atom or a fluorine atom; and Rf³ is a C1-C5 perfluoroalkyl group). Preferred examples of the allyl ether monomer include CH₂=CFCF₂-O-Rf³, CF₂=CFCH₂-O-Rf³, and CH₂=CHCF₂-O-Rf³ wherein Rf³ is defined as in the formula (III).

Examples of the monomer copolymerizable with TFE and PAVE or perfluoro(alkyl allyl ether) also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA preferably has a melting point of 180°C to 320°C, more preferably 230°C to 320°C, still more preferably 280°C to 320°C.

The PFA preferably has a MFR of 0.25 g/10 min or higher and 100 g/10 min or lower, more preferably 0.5 g/10 min or higher, still more preferably 1.0 g/10 min or higher, while more preferably 90 g/10 min or lower, still more preferably 80 g/10 min or lower.

The MFR of the PFA is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 372°C and a load of 5 kg.

The FEP is preferably, but is not limited to, a copolymer in which the mole ratio of the TFE unit to the HFP unit ((TFE unit)/(HFP unit)) is not smaller than 70/30 but smaller than 99/1. The mole ratio is more preferably 70/30 or higher and 98.9/1.1 or lower, still more preferably 80/20 or higher and 98.9/1.1 or lower. The FEP is also preferably a copolymer containing a polymerized unit derived from a monomer copolymerizable with TFE and HFP in an amount of 0.1 to 10 mol% (i.e., the TFE unit and the HFP unit represent 90 to 99.9 mol% in total), more preferably 0.1 to 5 mol%, particularly preferably 0.2 to 4 mol%.

Examples of the monomer copolymerizable with TFE and HFP include PAVE, a monomer represented by the formula (III), and an alkyl perfluorovinyl ether derivative represented by the formula (II).

Examples of the monomer copolymerizable with TFE and HFP also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The FEP preferably has a melting point of 150°C to 320°C, more preferably 200°C to 320°C, still more preferably 240°C to 320°C.

The FEP preferably has a MFR of 0.25 g/10 min or higher and 100 g/10 min or lower, more preferably 0.5 g/10 min or higher, still more preferably 1.0 g/10 min or higher, while more preferably 80 g/10 min or lower, still more preferably 60 g/10 min or lower.

The MFR of the FEP is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 372°C and a load of 5 kg.

The ETFE is preferably a copolymer in which the mole ratio of the TFE unit to the ethylene unit ((TFE unit)/(ethylene unit)) is 20/80 or higher and 90/10 or lower. The mole ratio is more preferably 37/63 or higher and 85/15 or lower, still more preferably 38/62 or higher and 80/20 or lower. The ETFE may be a copolymer containing TFE, ethylene, and a monomer copolymerizable with TFE and ethylene. Examples of the copolymerizable monomer include monomers represented by any of the formulas: CH₂=CX¹Rf⁴, CF₂=CFRf⁴, CF₂=CFORf⁴, and CH₂=C(Rf⁴)₂ (wherein X¹ is a hydrogen atom or a fluorine atom; and Rf⁴ is a fluoroalkyl group optionally containing an ether bond) and monomers represented by the formula (III). Preferred among these are fluorine-containing vinyl monomers represented by any of CF₂=CFRf⁴, CF₂=CFORf⁴, and CH₂=CX¹Rf⁴ and monomers represented by the formula (III). More preferred are HFP, a perfluoro(alkyl vinyl ether) represented by CF₂=CF-ORf⁵ (wherein Rf⁵ is a C1-C5 perfluoroalkyl group), a perfluoro(alkyl allyl ether) represented by CF₂=CF-CF₂-O-Rf³ (wherein Rf³ is a C1-C5 perfluoroalkyl group), and a fluorine-containing vinyl monomer represented by CH₂=CX¹Rf⁴ wherein Rf⁴ is a C1-C8 fluoroalkyl group.

The monomer copolymerizable with TFE and ethylene may be an aliphatic unsaturated carboxylic acid such as itaconic acid or itaconic anhydride. The monomer copolymerizable with TFE and ethylene is preferably in an amount of 0.1 to 10 mol%, more preferably 0.1 to 5 mol%, particularly preferably 0.2 to 4 mol% of the fluorine-containing polymer.

The ETFE preferably has a melting point of 140°C to 320°C, more preferably 160°C to 320°C, still more preferably 195°C to 320°C.

The ETFE preferably has a MFR of 0.25 g/10 min or higher and 100 g/10 min or lower, more preferably 0.5 g/10 min or higher, still more preferably 1.0 g/10 min or higher, while more preferably 90 g/10 min or lower, still more preferably 80 g/10 min or lower.

The MFR of the ETFE is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 297°C and a load of 5 kg.

The low molecular weight PTFE preferably has a melt viscosity (complex viscosity) at 380°C of 1.0 × 10¹ to 1.0 × 10⁷ Pa·s.

The melt viscosity is more preferably 1.0 × 10² Pa·s or higher, still more preferably 1.5 × 10³ Pa·s or higher, particularly preferably 7.0 × 10³ Pa·s or higher, while more preferably 7.0 × 10⁵ Pa·s or lower, still more preferably 3.0 × 10⁵ Pa·s or lower, particularly preferably 1.0 × 10⁵ Pa·s or lower.

The "low molecular weight PTFE" herein means PTFE having a melt viscosity within the above range.

The melt viscosity is a value determined by heating a 2-g sample at 380°C for five minutes in advance and then keeping the sample at this temperature under a load of 0.7 MPa using a flow tester (available from Shimadzu Corp.) and a 2ϕ-8 L die in conformity with ASTM D1238.

The low molecular weight PTFE preferably has a MFR, which is obtained as the mass (g/10 min) of a polymer flowing out of a nozzle (inner diameter: 2.095 mm, length: 8 mm) per 10 minutes at a temperature of 372°C and a load of 5 kg, of 0.25 g/10 min or higher, more preferably 0.10 g/10 min or higher, still more preferably 0.05 g/10 min or higher. The MFR is also preferably 50 g/10 min or lower, more preferably 30 g/10 min or lower, still more preferably 10 g/10 min or lower.

The low molecular weight PTFE preferably has a melting point of 320°C to 340°C. The melting point is more preferably 324°C or higher, while more preferably 336°C or lower, still more preferably 333°C or lower, further preferably 332°C or lower, even more preferably 331°C or lower, particularly preferably 330°C or lower.

The low molecular weight PTFE may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer include the monomers described above for the PTFE (high molecular weight PTFE) as a non-melt-flowable fluororesin.

The amounts of the respective polymerized units in the aforementioned polymer can be calculated by appropriate combination of NMR, FT-IR, elemental analysis, and X-ray fluorescence analysis in accordance with the types of the monomers.

The fluororesin B1 may be produced by a known polymerization technique such as emulsion polymerization, suspension polymerization, or solution polymerization.

The fluororesin composition (1) may contain particles of the fluororesin B1. The particles of the fluororesin B1 may be either primary particles or secondary particles of the fluororesin B1.

The particles of the fluororesin B1 in the form of primary particles (aqueous dispersion) preferably have an average primary particle size of 500 nm or smaller. The average primary particle size is more preferably 400 nm or smaller, still more preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

The particles of the fluororesin B1 in the form of secondary particles (powder) preferably have an average secondary particle size of 100 µm or smaller. The average secondary particle size is more preferably 70 µm or smaller, still more preferably 50 µm or smaller, particularly preferably 40 µm or smaller. The average secondary particle size is also preferably 1 µm or greater, more preferably 5 µm or greater, still more preferably 10 µm or greater, further preferably 20 µm or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (1) preferably further contains a non-melt-flowable fluororesin C including a portion having no history of being heated to a temperature equal to or higher than the melting point thereof. The fluororesin composition (1) has excellent tensile properties without containing a fluororesin C, but the presence of a fluororesin C can lead to much improved tensile properties.

The fluororesin composition (1) preferably contains fluororesins A and B and optionally a fluororesin C.

The fluororesin C includes a portion having no history of being heated to a temperature equal to or higher than the melting point thereof.

The fluororesin C preferably has one or more melting points within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the presence of a portion having no history of being heated to a temperature equal to or higher than the melting point.

In addition to the above melting point, the fluororesin C may also have a melting point within a temperature range lower than 333°C.

In the case of further containing a fluororesin C, the fluororesin composition (1) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin C including a portion having no history of being heated to a temperature equal to or higher than the melting point thereof.

The fluororesin C is non-melt-flowable. The term "melt-flowable" is defined as described above.

The fluororesin C is preferably PTFE. The PTFE may be a high molecular weight PTFE.

Preferably, the PTFE (high molecular weight PTFE) as a fluororesin C has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin C preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to a temperature equal to or higher than the melting point thereof, the term "high molecular weight" means that the standard specific gravity falls within the above range.

The PTFE as a fluororesin C commonly has non-melt secondary processibility. The term "non-melt secondary processibility" is defined as described above.

The PTFE as a fluororesin C may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin C include those described as examples for the PTFE (high molecular weight PTFE) as a fluororesin A.

The fluororesin composition (1) may contain particles of the fluororesin C. The particles of the fluororesin C may be either primary particles or secondary particles of the fluororesin C.

The particles of the fluororesin C in the form of primary particles (aqueous dispersion) preferably have an average primary particle size of 500 nm or smaller. The average primary particle size is more preferably 400 nm or smaller, still more preferably 350 nm or smaller, particularly preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

The particles of the fluororesin C in the form of secondary particles (powder) preferably have an average secondary particle size of 700 µm or smaller. The average secondary particle size is more preferably 500 µm or smaller, still more preferably 100 µm or smaller, further preferably 60 µm or smaller, particularly preferably 50 µm or smaller. The average secondary particle size is also preferably 1 µm or greater, more preferably 5 µm or greater, still more preferably 10 µm or greater, further preferably 20 µm or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In an embodiment of the fluororesin composition (1), the particles of the fluororesin C in the form of primary particles preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The average aspect ratio may be 1.0 or higher.

The average aspect ratio is determined as follows. Specifically, the fluororesin composition is observed using a scanning electron microscope (SEM) and 100 or more primary particles randomly selected are imaged. The ratio of the major and minor axes of each particle is then obtained and the average thereof is defined as the average aspect ratio.

In an embodiment of the fluororesin composition (1) where the particles of the fluororesin C are in the form of primary particles, the particles of the fluororesin C having an aspect ratio of 2.5 or higher are preferably in a proportion of 0.5% or more, more preferably 1.0% or more, still more preferably 1.5% or more, particularly preferably 2.0% or more of all particles of the fluororesin C. The proportion is also preferably 20% or less, more preferably 15% or less, still more preferably 10% or less.

The proportion is determined as follows. Specifically, the fluororesin composition is observed using a scanning electron microscope (SEM) and 100 or more primary particles randomly selected are imaged. The aspect ratio of each particle is then calculated and the proportion of the particles of interest is defined relative to the total number of the particles selected.

In order to achieve much improved tensile properties, the amount of the fluororesin A in the fluororesin composition (1) is preferably 10 to 99.5% by mass of the fluororesin composition. The amount is more preferably 30% by mass or more, still more preferably 40% by mass or more, particularly preferably 50% by mass or more, while more preferably 99% by mass or less, still more preferably 95% by mass or less, further preferably 90% by mass or less, even more preferably 85% by mass or less, particularly preferably 80% by mass or less.

In order to achieve much improved tensile properties, the amount of the fluororesin B1 in the fluororesin composition (1) is preferably 0.50 to 30% by mass of the fluororesin composition. The amount is more preferably 1.0% by mass or more, still more preferably 3% by mass or more, further preferably 5% by mass or more, particularly preferably 7% by mass or more, while more preferably 25% by mass or less, still more preferably 20% by mass or less, further preferably 15% by mass or less, particularly preferably 10% by mass or less.

In order to achieve much improved tensile properties, the amount of the fluororesin C in the fluororesin composition (1) is preferably 0 to 80% by mass of the fluororesin composition. The amount is more preferably 1% by mass or more, still more preferably 10% by mass or more, further preferably 20% by mass or more, even more preferably 30% by mass or more, particularly preferably 40% by mass or more, while more preferably 75% by mass or less, still more preferably 70% by mass or less, further preferably 65% by mass or less, even more preferably 60% by mass or less, particularly preferably 50% by mass or less.

The total amount of the fluororesins A to C in the fluororesin composition (1) is preferably 80% by mass or more, more preferably 85% by mass or more, still more preferably 90% by mass or more, further preferably 95% by mass or more, particularly preferably 98% by mass or more of the fluororesin composition.

The fluororesin composition (1) is non-melt-flowable.

The fluororesin composition (1) may have a MFR of lower than 0.25 g/10 min, preferably lower than 0.10 g/10 min, more preferably 0.05 g/10 min or lower.

Alternatively, based on the thickness of a preformed article (non-fired molded article) prepared by compression-molding the fluororesin composition (1) and the thickness thereof after heating at a temperature equal to or higher than the melting point of the fluororesin composition for one hour or longer, the thickness after heating is preferably smaller than the thickness before heating by less than 20% or the thickness after heating is preferably greater than the thickness before heating because these cases means that the fluororesin composition is non-melt-flowable.

Preferably, the fluororesin composition (1) contains a TFE unit and a modifying monomer unit based on a modifying monomer copolymerizable with TFE and the modifying monomer unit is present in an amount of 1.0% by mass or less of all polymerized units. The TFE unit is preferably present in an amount of 99.0% by mass or more.

The lower limit of the amount of the modifying monomer unit in the fluororesin composition (1) may be 0% by mass, and is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The amount of the modifying monomer unit can be calculated by appropriate combination of NMR, FT-IR, elemental analysis, and X-ray fluorescence analysis in accordance with the type of the monomer. In the case where the composition of materials is known, the amounts may be calculated from the composition of materials.

The fluororesin composition (1) may be in any form, and is preferably in the form of powder.

The first fluororesin composition of the disclosure preferably has an average secondary particle size of 5 to 700 µm. The average secondary particle size is more preferably 10 µm or greater, still more preferably 20 µm or greater, while more preferably 600 µm or smaller, still more preferably 500 µm or smaller, particularly preferably 400 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (1) preferably has a D90 of 10 µm or greater, more preferably 30 µm or greater, still more preferably 50 µm or greater, while preferably 600 µm or smaller, more preferably 500 µm or smaller, still more preferably 400 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved tensile properties, the fluororesin composition (1) preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include C4 or higher fluorine-containing carboxylic acids and salts thereof and C4 or higher fluorine-containing sulfonic acid and salts thereof. Each of these may contain an ether bond (-O-).

The low molecular weight fluorine-containing compound may be, for example, a fluorine-containing anion surfactant. For example, the fluorine-containing anion surfactant may be a surfactant which contains a fluorine atom and in which the portions excluding the anionic group have a total carbon number of 20 or less.

The fluorine-containing anion surfactant may also be a surfactant containing a fluorine atom and including an anionic portion having a molecular weight of 1000 or lower, or a surfactant containing a fluorine atom and including an anionic portion having a molecular weight of 800 or lower.

The "anionic portion" means a portion of the fluorine-containing surfactant excluding the cation. For example, in the case of F(CF₂)ₙ₁COOM represented by the formula (I) to be described later, the portion "F(CF₂)ₙ₁COO" corresponds to the anionic portion.

The low molecular weight fluorine-containing compound may also be a fluorine-containing surfactant having a LogPOW of 3.5 or lower. The LogPOW is a partition coefficient of 1-octanol and water, and is represented by LogP wherein P is the ratio (concentration of fluorine-containing surfactant in octanol)/(concentration of fluorine-containing surfactant in water) after phase separation of an octanol/water (1:1) liquid mixture containing the fluorine-containing surfactant.

The LogPOW is calculated as follows. Specifically, HPLC is performed on standard substances (heptanoic acid, octanoic acid, nonanoic acid, and decanoic acid) having known octanol/water partition coefficients under the following conditions, i.e., column: TOSOH ODS-120T column (ϕ4.6 mm × 250 mm, available from Tosoh corp.); eluent: acetonitrile/0.6% by mass HClO₄ in water = 1/1 (vol/vol%); flow rate: 1.0 mL/min; amount of sample: 300 µL, column temperature: 40°C, and detection light: UV 210 nm. A calibration curve is then drawn using the respective elution times and known octanol/water partition coefficients. Based on this calibration curve, the LogPOW is calculated from the elution time of a sample liquid in HPLC.

Specific examples of the fluorine-containing surfactant include those disclosed in US 2007/0015864 A1, US 2007/0015865 A1, US 2007/0015866 A1, US 2007/0276103 A1, US 2007/0117914 A1, US 2007/142541 A1, US 2008/0015319 A1, US 3250808 A, US 3271341 A, JP 2003-119204 A, WO 2005/042593 A1, WO 2008/060461 A1, WO 2007/046377 A1, JP 2007-119526 A, WO 2007/046482 A1, WO 2007/046345 A1, US 2014/0228531 A1, WO 2013/189824 A1, and WO 2013/189826 A1.

Examples of the fluorine-containing anion surfactant include compounds represented by the following formula (N⁰):

Xⁿ⁰-Rfⁿ⁰-Y⁰ (N⁰)

wherein Xⁿ⁰ is H, Cl, or/and F; Rfⁿ⁰ is a C3-C20 linear, branched, or cyclic alkylene group in which any or all of H atoms are replaced by F atoms, where the alkylene group optionally contains at least one ether bond and any H is optionally replaced by Cl; and Y⁰ is an anionic group.

The anionic group for Y⁰ may be -COOM, -SO₂M, or - SO₃M, and may be -COOM or -SO₃M.

M is H, a metal atom, NR⁷₄, imidazolium optionally having a substituent, pyridinium optionally having a substituent, or phosphonium optionally having a substituent, where R⁷ is H or an organic group.

Examples of the metal atom include alkali metals (Group 1) and alkaline earth metals (Group 2), such as Na, K, and Li.

R⁷ may be H or a C1-C10 organic group, or may be H or a C1-C4 organic group, or may be H or a C1-C4 alkyl group.

M may be H, a metal atom, or NR⁷₄, or may be H, an alkali metal (Group 1), an alkaline earth metal (Group 2), or NR⁷₄, or may be H, Na, K, Li, or NH₄.

Rfⁿ⁰ may be a group in which 50% or more of H atoms are replaced by fluorine atoms.

Examples of the compounds represented by the formula (N⁰) include
compounds represented by the following formula (N¹):

   Xⁿ⁰-(CF₂)ₘ₁-Y⁰ (N¹)

   wherein Xⁿ⁰ is H, Cl, or F; m1 is an integer of 3 to 15; and Y⁰ is defined as described above;
compounds represented by the following formula (N²):

   Rfⁿ¹-O-(CF(CF₃)CF₂O)ₘ₂CFXⁿ¹-Y⁰ (N²)

   wherein Rfⁿ¹ is a C1-C5 perfluoroalkyl group; m2 is an integer of 0 to 3; Xⁿ¹ is F or CF₃; and Y⁰ is defined as described above;
compounds represented by the following formula (N³):

   Rfⁿ²(CH₂)ₘ₃-(Rfⁿ³)_{q}-Y⁰ (N³)

   wherein Rfⁿ² is a C1-C13 partially or completely fluorinated alkyl group optionally containing an ether bond and/or a chlorine atom; m3 is an integer of 1 to 3; Rfⁿ³ is a C1-C3 linear or branched perfluoroalkylene group; q is 0 or 1; and Y⁰ is defined as described above;
compounds represented by the following formula (N⁴):

   Rfⁿ⁴-O-(CYⁿ¹Yⁿ²)ₚCF₂-Y⁰ (N⁴)

   wherein Rfⁿ⁴ is a C1-C12 linear or branched, partially or completely fluorinated alkyl group optionally containing an ether bond; Yⁿ¹ and Yⁿ² are the same as or different from each other and are each H or F; p is 0 or 1; and Y⁰ is defined as described above; and
compounds represented by the following formula (N⁵): 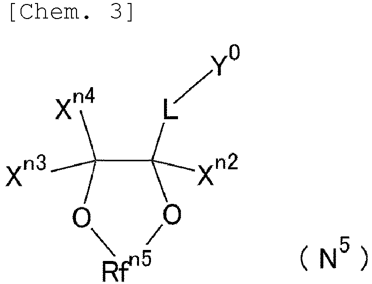 wherein Xⁿ², Xⁿ³, and Xⁿ⁴ are the same as or different from each other and are each H, F, or a C1-C6 linear or branched, partially or completely fluorinated alkyl group optionally containing an ether bond; Rfⁿ⁵ is a C1-C3 linear or branched, partially or completely fluorinated alkylene group optionally containing an ether bond; L is a linking group; and Y⁰ is defined as described above, where the total carbon number of Xⁿ², Xⁿ³, Xⁿ⁴, and Rfⁿ⁵ is 18 or less.

Specific examples of the compound represented by the formula (N⁰) include a perfluorocarboxylic acid (I) represented by the following formula (I), an ω-H perfluorocarboxylic acid (II) represented by the following formula (II), a perfluoroether carboxylic acid (III) represented by the following formula (III), a perfluoroalkyl alkylene carboxylic acid (IV) represented by the following formula (IV), an alkoxyfluorocarboxylic acid (V) represented by the following formula (V), a perfluoroalkyl sulfonic acid (VI) represented by the following formula (VI), an ω-H perfluorosulfonic acid (VII) represented by the following formula (VII), a perfluoroalkyl alkylene sulfonic acid (VIII) represented by the following formula (VIII), an alkyl alkylene carboxylic acid (IX) represented by the following formula (IX), a fluorocarboxylic acid (X) represented by the following formula (X), an alkoxyfluorosulfonic acid (XI) represented by the following formula (XI), a compound (XII) represented by the following formula (XII), and a compound (XIII) represented by the following formula (XIII).

The perfluorocarboxylic acid (I) is represented by the following formula (I):

F(CF₂)ₙ₁COOM (I)

wherein n1 is an integer of 3 to 14; M is H, a metal atom, NR⁷₄, imidazolium optionally having a substituent, pyridinium optionally having a substituent, or phosphonium optionally having a substituent, where R⁷ is H or an organic group.

The ω-H perfluorocarboxylic acid (II) is represented by the following formula (II):

H(CF₂)ₙ₂COOM (II)

wherein n2 is an integer of 4 to 15; and M is defined as described above.

The perfluoroether carboxylic acid (III) is represented by the following formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is defined as described above.

The perfluoroalkyl alkylene carboxylic acid (IV) is represented by the following formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is defined as described above.

The alkoxyfluorocarboxylic acid (V) is represented by the following formula (V):

Rf⁴-O-CY¹Y²CF₂-COOM (V)

wherein Rf⁴ is a C1-C12 linear or branched, partially or completely fluorinated alkyl group optionally containing an ether bond and/or a chlorine atom; Y¹ and Y² are the same as or different from each other and are each H or F; and M is defined as described above.

The perfluoroalkylsulfonic acid (VI) is represented by the following formula (VI):

F(CF₂)ₙ₅SO₃M (VI)

wherein n5 is an integer of 3 to 14; and M is defined as described above.

The ω-H perfluorosulfonic acid (VII) is represented by the following formula (VII):

H(CF₂)ₙ₆SO₃M (VII)

wherein n6 is an integer of 4 to 14; and M is defined as described above.

The perfluoroalkyl alkylene sulfonic acid (VIII) is represented by the following formula (VIII):

Rf⁵(CH₂)ₙ₇SO₃M (VIII)

wherein Rf⁵ is a C1-C13 perfluoroalkyl group; n7 is an integer of 1 to 3; and M is defined as described above.

The alkyl alkylene carboxylic acid (IX) is represented by the following formula (IX):

Rf⁶(CH₂)ₙ₈COOM (IX)

wherein Rf⁶ is a C1-C13 linear or branched, partially or completely fluorinated alkyl group optionally containing an ether bond; n8 is an integer of 1 to 3; and M is defined as described above.

The fluorocarboxylic acid (X) is represented by the following formula (X):

Rf⁷-O-Rf⁸-O-CF₂-COOM (X)

wherein Rf⁷ is a C1-C6 linear or branched, partially or completely fluorinated alkyl group optionally containing an ether bond and/or a chlorine atom; Rf⁸ is a C1-C6 linear or branched, partially or completely fluorinated alkyl group; and M is defined as described above.

The alkoxyfluorosulfonic acid (XI) is represented by the following formula (XI):

Rf⁹-O-CY¹Y²CF₂-SO₃M (XI)

wherein Rf⁹ is a C1-C12 linear or branched, partially or completely fluorinated alkyl group optionally containing an ether bond and optionally containing a chlorine atom; Y¹ and Y² are the same as or different from each other and are each H or F; and M is defined as described above.

The compound (XII) is represented by the following formula (XII): 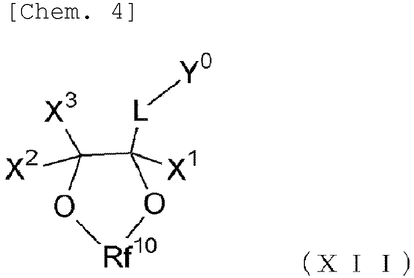 wherein X¹, X², and X³ are the same as or different from each other and are each H, F, or a C1-C6 linear or branched, partially or completely fluorinated alkyl group optionally containing an ether bond; Rf¹⁰ is a C1-C3 perfluoroalkylene group; L is a linking group; and Y⁰ is an anionic group.

Y⁰ may be -COOM, -SO₂M, or -SO₃M, or may be -SO₃M or COOM, wherein M is defined as described above.

L may be a single bond or a C1-C10 partially or completely fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is defined as described above. The compound (XIII) may be CF₂ClO(CF₂CF(CF₃)O)ₙ₉(CF₂O)ₙ₁₀CF₂COONH₄, which is a mixture having an average molecular weight of 750, wherein n9 and n10 are defined as described above.

As described above, examples of the fluorine-containing anion surfactant include carboxylic acid surfactants and sulfonic acid surfactants.

The fluorine-containing surfactant may be a single fluorine-containing surfactant or may be a mixture of two or more fluorine-containing surfactants.

Examples of the fluorine-containing surfactant include compounds represented by any of the following formulas. The fluorine-containing surfactant may be a mixture of any of these compounds:

F(CF₂)₇COOM,

F(CF₂)₅COOM,

H (CF₂)₆COOM,

H (CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM, and

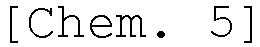

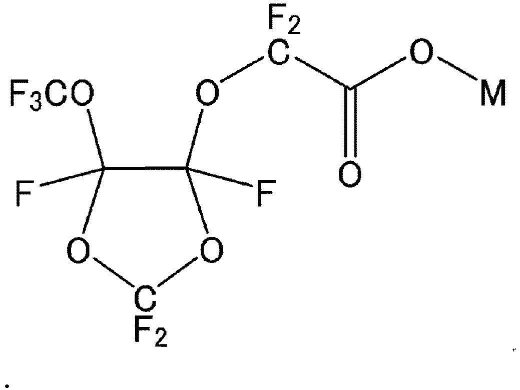

In the formulas, M is H, a metal atom, NR⁷₄, imidazolium optionally having a substituent, pyridinium optionally having a substituent, or phosphonium optionally having a substituent; where R⁷ is defined as described above.

The fluororesin composition (1) may be produced, for example, by mixing the powder of the fluororesin A, particles of the fluororesin B1, the filler, and optionally particles of the fluororesin C.

The particles of the fluororesin B1 to be mixed with the powder of the fluororesin A may be in the form of powder or may be in the form of aqueous dispersion. In order to produce a fluororesin composition having much better tensile properties, the particles of the fluororesin B1 to be mixed with the powder of the fluororesin A are preferably in the form of aqueous dispersion.

An aqueous dispersion containing the particles of the fluororesin B1 may be produced by a known method. For example, the aqueous dispersion may be produced by emulsion polymerization of monomers to form a fluororesin B1 in an aqueous medium in the presence of an anion surfactant and a polymerization initiator. The emulsion polymerization may be accompanied by appropriate use of additives such as a chain transfer agent, a buffer, a pH adjuster, a stabilization aid, and a dispersion stabilizer.

A person skilled in the art would control the composition and physical properties of the fluororesin B1 as well as the physical properties of the particles by adjusting the conditions for emulsion polymerization.

The aqueous dispersion may contain a hydrocarbon surfactant. The hydrocarbon surfactant is preferably free from a fluorine atom. The hydrocarbon surfactant may be one used in the emulsion polymerization or may be one added after the emulsion polymerization.

The hydrocarbon surfactant to be used may be any of those described in JP 2013-542308 T, JP 2013-542309 T, or JP 2013-542310 T, for example.

The hydrocarbon surfactant has a hydrophilic portion and a hydrophobic portion on the same molecule. These may be cationic, nonionic, or anionic.

Common cationic surfactants have a positively charged hydrophilic portion such as an alkylated ammonium halide, e.g., alkylated ammonium bromide, and a hydrophobic portion such as a long-chain fatty acid.

Common anion surfactants have a hydrophilic portion such as a carboxylic acid salt, a sulfonic acid salt, or a sulfuric acid salt, and a hydrophobic portion such as a long-chain hydrocarbon portion, e.g., an alkyl.

Common nonionic surfactants are free from a charged group and have a hydrophilic portion which is a long-chain hydrocarbon. The hydrophilic portion of a nonionic surfactant contains a water-soluble functional group such as the chain of ethylene ether induced by polymerization with ethylene oxide.

The hydrocarbon surfactant is preferably an anion surfactant or a nonionic surfactant.

Examples of the anionic hydrocarbon surfactant include Versatic^{®} 10 available from Resolution Performance Products, LLC and Avanel S series (e.g., S-70, S-74) available from BASF.

The anionic hydrocarbon surfactant may also be an anion surfactant represented by R-L-M¹ wherein R is a C1 or higher linear or branched alkyl group optionally containing a substituent or a C3 or higher cyclic alkyl group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻ being an aryl sulfonic acid salt.

Specific examples thereof include those represented by CH₃-(CH₂)ₙ-L-M¹ wherein n is an integer of 6 to 17; and L and M¹ are defined as described above.

Also usable is a mixture of those in which R is a C12-C16 alkyl group and L is a sulfuric acid salt or sodium dodecyl sulfate (SDS).

The anionic hydrocarbon surfactant may also be an anion surfactant represented by R⁶(-L-M¹)₂ wherein R⁶ is a C1 or higher linear or branched alkylene group optionally containing a substituent or a C3 or higher cyclic alkylene group optionally containing a substituent, where the group optionally contains a monovalent or divalent heterocycle or optionally forms a ring in the case where it is a C3 or higher alkylene group; L is -ArSO₃⁻, -SO₃⁻, -SO₄⁻, -PO₃⁻, or -COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻ being an aryl sulfonic acid salt.

The anionic hydrocarbon surfactant may also be an anion surfactant represented by R⁷(-L-M¹)₃ wherein R⁷ is a C1 or higher linear or branched alkylidyne group optionally containing a substituent or a C3 or higher cyclic alkylidyne group optionally containing a substituent, where the group optionally contains a monovalent or divalent heterocycle or optionally forms a ring in the case where it is a C3 or higher alkylidyne group; L is -ArSO₃⁻, -SO₃⁻, - SO₄⁻, -PO₃⁻, or -COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻ being an aryl sulfonic acid salt.

An example of the anionic hydrocarbon surfactant is a sulfosuccinate surfactant Lankropol^{®} K8300 available from Akzo Nobel Surface Chemistry LLC.

Examples of sulfosuccinate hydrocarbon surfactants include sodium diisodecyl sulfosuccinate (Emulsogen^{®} SB10, available from Clariant) and sodium diisotridecyl sulfosuccinate (Polirol^{®} TR/LNA, available from Cesapinia Chemicals).

Examples of the anionic hydrocarbon surfactant also include PolyFox^{®} surfactants (e.g., PolyFox^{™} PF-156A and PolyFox^{™} PF-136A) available from Omnova Solutions, Inc.

Examples of the nonionic surfactant include ether nonionic surfactants such as a polyoxyethylene alkyl ether, a polyoxyethylene alkyl phenyl ether, and a polyoxyethylene alkylene alkyl ether; polyoxyethylene derivatives such as an ethylene oxide/propylene oxide block copolymer; ester nonionic surfactants such as a polyoxyethylene fatty acid ester (polyoxyethylene alkyl ester), a sorbitan fatty acid ester (sorbitan alkyl ester), a polyoxyethylene sorbitan fatty acid ester (polyoxyethylene sorbitan alkyl ester), a polyoxyethylene sorbitol fatty acid ester, and a glycerin fatty acid ester (glycerol ester); amine nonionic surfactants such as a polyoxyethylene alkyl amine and an alkyl alkanol amide; and derivatives thereof. One of these may be used alone, or two or more of these may be used in combination.

The nonionic surfactant may be a non-fluorinated nonionic surfactant.

Examples of the polyoxyethylene alkyl ether include polyoxyethylene lauryl ether, polyoxyethylene cetyl ether, polyoxyethylene stearyl ether, polyoxyethylene oleyl ether, and polyoxyethylene behenyl ether.

Examples of the polyoxyethylene alkyl phenyl ether include polyoxyethylene nonyl phenyl ether and polyoxyethylene octyl phenyl ether.

Specific examples of the polyoxyethylene fatty acid ester include polyethylene glycol monolaurate, polyethylene glycol monooleate, and polyethylene glycol monostearate.

Examples of the sorbitan fatty acid ester include sorbitan monolaurate, sorbitan monopalmitate, sorbitan monostearate, and sorbitan monooleate.

Examples of the polyoxyethylene sorbitan fatty acid ester include polyoxyethylene sorbitan monolaurate, polyoxyethylene sorbitan monopalmitate, and polyoxyethylene sorbitan monostearate.

Examples of the glycerin fatty acid ester include glycerol monomyristate, glycerol monostearate, and glycerol monooleate.

Examples of the derivatives include a polyoxyethylene alkyl amine, a polyoxyethylene alkyl phenyl-formaldehyde condensate, and a polyoxyethylene alkyl ether phosphate.

The ether nonionic surfactant and the ester nonionic surfactant may have a HLB value of 10 to 18.

Examples of the nonionic hydrocarbon surfactant include Triton^{®} X series (e.g., X15, X45, X100), Tergitol^{®} 15-S series, Tergitol^{®} TMN series (e.g., TMN-6, TMN-10, TMN-100), and Tergitol^{®} L series available from Dow Chemical Company, Pluronic^{®} R series (31R1, 17R2, 10R5, 25R4 (m: ~22, n: ~23)), T-Det series (A138), and Iconol^{®} TDA series (TDA-6, TDA-9, TDA-10) available from BASF.

In the compound of the nonionic surfactant, the hydrophobic group thereof may be any of an alkyl phenol group, a linear alkyl group, and a branched alkyl group. Still, the compound is preferably one containing no benzene ring, such as a compound having no alkyl phenol group in the structure.

In particular, the nonionic surfactant is preferably one containing an ether bond (-O-), more preferably the aforementioned ether nonionic surfactant, still more preferably a polyoxyethylene alkyl ether. The polyoxyethylene alkyl ether is preferably one including a polyoxyethylene alkyl ether structure containing a C10-C20 alkyl group, more preferably one including a polyoxyethylene alkyl ether structure containing a C10-C15 alkyl group. The alkyl group in the polyoxyethylene alkyl ether structure preferably has a branched structure.

In order to produce a fluororesin composition suffering much less coloring and having much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

The aqueous dispersion obtained by emulsion polymerization or the aqueous dispersion containing a hydrocarbon surfactant may be brought into contact with an anion exchange resin or a mixed bed containing an anion exchange resin and a cation exchange resin, or may be condensed, or may be treated by both of these treatments. This treatment can remove a low molecular weight fluorine-containing compound. The treatment to be used may be a known treatment.

A mixture obtained by mixing the powder of the fluororesin A and the aqueous dispersion containing the particles of the fluororesin B1 may be coagulated. This coagulation may be performed by a method of coagulating emulsified particles by freezing or mechanical shearing force. Stirring may be performed while a coagulating agent is added, such as a water-soluble organic compound, e.g., methanol or acetone, an inorganic salt, e.g., potassium nitrate or ammonium carbonate, or an inorganic acid such as hydrochloric acid, sulfuric acid, or nitric acid. The coagulation may be continuously performed using, for example, an inline mixer.

The mixture is then dried, whereby a fluororesin composition is obtained. A wet powder obtained by the coagulation may be dried.

The drying may be performed by any method, and may be performed by a known method using, for example, vacuum, high frequency waves, or hot air.

The drying temperature is preferably 50°C or higher, more preferably 70°C or higher, still more preferably 100°C or higher, particularly preferably 150°C or higher, while preferably 300°C or lower, more preferably 250°C or lower.

The particles of the fluororesin C to be mixed with the powder of the fluororesin A (and the particles of the fluororesin B1) may be in the form of powder or may be in the form of aqueous dispersion.

The resulting fluororesin composition may be pulverized. The pulverization may be performed by any known method, such as use of an air jet mill, a hammer mill, a force mill, a millstone pulverizer, or a freeze pulverizer.

The resulting fluororesin composition may be granulated. This can provide a fluororesin composition having a high apparent density and excellent handleability.

The granulation may be performed by any known method, such as underwater granulation, hot water granulation, emulsification-dispersion granulation, emulsification hot water granulation, solvent-free granulation, or dry solvent granulation.

The first fluororesin composition of the disclosure is also preferably a fluororesin composition (also referred to as a fluororesin composition (2a)) containing: a non-melt-flowable fluororesin A having a history of being heated to a temperature equal to or higher than the melting point thereof; a non-melt-flowable fluororesin B2 having no history of being heated to a temperature equal to or higher than the melting point thereof and being prepared by suspension polymerization; and a filler, the fluororesin composition having an apparent density of 0.42 g/ml or higher.

The fluororesin composition (2a) contains a fluororesin B2 having no history of being heated to a temperature equal to or higher than the melting point thereof and being prepared by suspension polymerization and has an apparent density within a specific range. It therefore has excellent handleability (e.g., handleability during transport or compression molding) while containing a fluororesin A having a history of being heated to a temperature equal to or higher than the melting point thereof.

The fluororesin composition (2a) has good tensile properties (e.g., tensile strength at break and tensile strain at break).

The fluororesin composition (2a) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin B2 having no history of being heated to a temperature equal to or higher than the melting point thereof.

The fluororesin A and filler used in the fluororesin composition (2a) may be those described above.

The fluororesin B2 has no history of being heated to a temperature equal to or higher than the melting point thereof.

The fluororesin B2 preferably has a melting point of 100°C to 360°C. The melting point is more preferably 140°C or higher, still more preferably 160°C or higher, while more preferably 355°C or lower, still more preferably 350°C or lower.

The fluororesin B2 preferably has at least one melting point within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the absence of a history of being heated to a temperature equal to or higher than the melting point.

In addition to the above melting point, the fluororesin B2 may also have a melting point within a temperature range lower than 333°C.

The fluororesin B2 is non-melt-flowable. The term "melt-flowable" is defined as described above.

The fluororesin B2 is preferably PTFE. The PTFE may be a high molecular weight PTFE.

Preferably, the PTFE (high molecular weight PTFE) as a fluororesin B2 has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B2 preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to a temperature equal to or higher than the melting point thereof, the term "high molecular weight" means that the standard specific gravity falls within the above range.

The PTFE as a fluororesin B2 commonly has non-melt secondary processibility. The term "non-melt secondary processibility" is defined as described above.

The PTFE as a fluororesin B2 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

In order to provide a fluororesin composition having a much higher apparent density and much better handleability and to provide a fluororesin composition having much better tensile properties, a modified PTFE is preferred.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B2 include those described as examples for the PTFE (high molecular weight PTFE) as a fluororesin **A.**

The fluororesin B2 is produced by suspension polymerization. A non-melt-flowable fluororesin prepared by suspension polymerization is less likely to fiberize and can therefore lead to a high apparent density and improved handleability of a fluororesin composition.

The non-melt-flowable fluororesin B2 prepared by suspension polymerization preferably satisfies all of the following properties:
(i) the proportion of particles having a particle size of 1 µm or smaller, which is obtained by image processing using a scanning electron microscope (SEM), is 30% or lower; and
(ii) the amount of an anionic fluorine-containing surfactant, which is determined using a liquid chromatograph-mass spectrometer (LC/MS/MS) on a Soxhlet extract with methanol, is 1 ppm by mass or less.

The suspension polymerization may be performed by any known method. For example, monomers necessary to form a fluororesin B2 are polymerized while a polymerization initiator is dispersed in an aqueous medium using no or a limited amount of anionic fluorine-containing surfactant, whereby a granular powder of the fluororesin B2 can be directly isolated.

The fluororesin B2 used may be a powder directly obtained by the suspension polymerization, or this powder may be pulverized and/or granulated into a powder of the fluororesin **B2.**

The pulverization may be performed by any known method, such as a method in which the powder is pulverized using a pulverizer such as a hammer mill, a pin mill, a jet mill, or a cutting mill.

Also, the granulation may be performed by any known method, such as underwater granulation, hot water granulation, emulsification-dispersion granulation, emulsification hot water granulation, solvent-free granulation, or dry solvent granulation.

The fluororesin composition (2a) may contain particles of the fluororesin B2. The particles of the fluororesin B2 may be secondary particles of the fluororesin B2.

The particles of the fluororesin B2 preferably have an average secondary particle size of 1 to 700 µm. The average secondary particle size is more preferably 5 µm or greater, still more preferably 10 µm or greater, further preferably 20 µm or greater. The average secondary particle size is more preferably 500 µm or smaller, still more preferably 150 µm or smaller, further preferably 100 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin B2 preferably have a D90 of 10 µm or greater, more preferably 30 µm or greater, still more preferably 50 µm or greater, while preferably 600 µm or smaller, more preferably 500 µm or smaller, still more preferably 400 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (2a) has an apparent density of 0.42 g/ml or higher. The fluororesin composition (2a) having an apparent density within this range has excellent handleability.

In order to achieve much better handleability, the apparent density is preferably 0.45 g/ml or higher, more preferably 0.47 g/ml or higher. The upper limit may be, but is not limited to, 1.00 g/ml.

The apparent density is determined in conformity with JIS K6891.

In order to achieve much improved tensile properties, the amount of the fluororesin A in the fluororesin composition (2a) is preferably 10 to 90% by mass of the fluororesin composition. The amount is more preferably 20% by mass or more, still more preferably 30% by mass or more, further preferably 40% by mass or more, particularly preferably 50% by mass or more, while more preferably 85% by mass or less, still more preferably 80% by mass or less, further preferably less than 80% by mass, even more preferably 75% by mass or less, particularly preferably 70% by mass or less.

In order to achieve much improved tensile properties, the amount of the fluororesin B2 in the fluororesin composition (2a) is preferably 10 to 90% by mass of the fluororesin composition. The amount is more preferably 15% by mass or more, still more preferably 20% by mass or more, further preferably more than 20% by mass, even more preferably 25% by mass or more, particularly preferably 30% by mass or more, while more preferably 80% by mass or less, still more preferably 70% by mass or less, further preferably 60% by mass or less, particularly preferably 50% by mass or less.

The total amount of the fluororesins A and B2 in the fluororesin composition (2a) is preferably 80% by mass or more, more preferably 85% by mass or more, still more preferably 90% by mass or more, further preferably 95% by mass or more, particularly preferably 98% by mass or more of the fluororesin composition.

Preferably, the fluororesin composition (2a) contains a TFE unit and a modifying monomer unit based on a modifying monomer copolymerizable with TFE and the modifying monomer unit is present in an amount of 1.0% by mass or less of all polymerized units. The TFE unit is preferably present in an amount of 99.0% by mass or more.

The lower limit of the amount of the modifying monomer unit in the fluororesin composition (2a) may be 0% by mass, and is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The amount of the modifying monomer unit can be calculated by appropriate combination of NMR, FT-IR, elemental analysis, and X-ray fluorescence analysis in accordance with the type of the monomer. In the case where the composition of materials is known, the amounts may be calculated from the composition of materials.

In a preferred embodiment of the fluororesin composition (2a), the fluororesin B2 is a homopolymer of TFE and the fluororesin A is contained in an amount of not less than 50% by mass but less than 80% by mass of the fluororesin composition. In this embodiment, the amount of the fluororesin A is more preferably 75% by mass or less, still more preferably 70% by mass or less of the fluororesin composition.

In another preferred embodiment of the fluororesin composition (2a), the fluororesin A is contained in an amount of 50% by mass or more of the fluororesin composition and the fluororesin composition has a tensile strength at break of 20 MPa or higher.

The tensile strength at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

In this embodiment, the fluororesin B2 is also preferably a homopolymer of TFE.

The first fluororesin composition of the disclosure is also preferably a fluororesin composition (also referred to as a fluororesin composition (2b)) containing: a non-melt-flowable fluororesin A having a history of being heated to a temperature equal to or higher than the melting point thereof; a non-melt-flowable fluororesin B2 having no history of being heated to a temperature equal to or higher than the melting point thereof and being prepared by suspension polymerization; and a filler, the fluororesin composition containing a TFE unit and a modifying monomer unit based on a modifying monomer copolymerizable with TFE.

The fluororesin composition (2b) has a specific composition of monomers and therefore has excellent handleability (e.g., handleability during transport or compression molding) while containing a fluororesin A having a history of being heated to the melting point thereof or higher.

The fluororesin composition (2b) has good tensile properties (e.g., tensile strength at break and tensile strain at break).

The fluororesin composition (2b) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin B2 having no history of being heated to a temperature equal to or higher than the melting point thereof.

The fluororesin A and filler used in the fluororesin composition (2b) may be those described above.

Examples of the fluororesin B2 in the fluororesin composition (2b) include those for the fluororesin B2 in the fluororesin composition (2a), and preferred is a modified PTFE containing 99.0% by mass or more of a polymerized unit based on TFE (TFE unit) and 1.0% by mass or less of a polymerized unit based on a modifying monomer (modifying monomer unit). The fluororesin B2 may consist only of a TFE unit and a modifying monomer unit.

Examples of the modifying monomer include the monomers described above for the modified PTFE as a fluororesin B2 in the fluororesin composition (2a). A preferred range of the amount of the modifying monomer unit is also the same as the range described for the fluororesin composition (2a).

The fluororesin B2 in the fluororesin composition (2b) is the same as the fluororesin B2 in the fluororesin composition (2a) except for the composition thereof.

The fluororesin composition (2b) contains a TFE unit and a modifying monomer unit based on a modifying monomer copolymerizable with TFE. The fluororesin composition (2b) may consist only of a TFE unit and a modifying monomer unit as the polymerized units.

In order to achieve much improved handleability and much improved tensile properties of the fluororesin composition, the modifying monomer unit is preferably contained in an amount of 1.0% by mass or less of all polymerized units of the fluororesin composition. The lower limit of the amount of the modifying monomer unit is preferably 0.00001% by mass, more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The fluororesin composition (2b) preferably contains the TFE unit in an amount of 99.0% by mass or more of all polymerized units.

The amounts of the respective polymerized units of the fluororesin composition (2b) can be calculated by appropriate combination of NMR, FT-IR, elemental analysis, and X-ray fluorescence analysis in accordance with the types of the monomers. In the case where the composition of materials is known, the amounts may be calculated from the composition of materials.

The amounts of the fluororesins A and B2 in the fluororesin composition (2b) as well as the total amount of the fluororesins A and B are the same as the respective amounts described for the fluororesin composition (2a).

In order to achieve much better handleability, the fluororesin composition (2b) preferably has an apparent density of 0.42 g/ml or higher, more preferably 0.45 g/ml or higher, still more preferably 0.47 g/ml or higher. The upper limit may be, but is not limited to, 1.00 g/ml.

The apparent density is determined in conformity with JIS K6891.

The fluororesin compositions (2a) and (2b) may be in any form, and are each preferably in the form of powder.

In the fluororesin compositions (2a) and (2b), particles of the fluororesin A preferably have a smaller maximum linear length than particles of the fluororesin B2. This relationship between the maximum linear lengths of the particles of the fluororesins A and B2 can lead to a high apparent density of the fluororesin composition, resulting in much improved handleability. This relationship can also eliminate the need for a change in the shape of the particles of the fluororesin A to achieve a greater maximum linear length, reducing the cost of producing the fluororesin composition.

The fluororesin compositions (2a) and (2b) each preferably satisfy all of the following properties:
(i) the proportion of particles having a particle size of 1 µm or smaller, which is obtained by image processing using a scanning electron microscope (SEM), is 30% or lower; and
(ii) the amount of an anionic fluorine-containing surfactant, which is determined using a liquid chromatograph-mass spectrometer (LC/MS/MS) on a Soxhlet extract with methanol, is 1 ppm by mass or less.

In order to achieve excellent flowability and much better handleability, the fluororesin compositions (2a) and (2b) each preferably have an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The fluororesin compositions (2a) and (2b) each preferably have an average secondary particle size of 5 to 700 µm. The average secondary particle size is more preferably 10 µm or greater, still more preferably 20 µm or greater, while more preferably 600 µm or smaller, still more preferably 500 µm or smaller, particularly preferably 400 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin compositions (2a) and (2b) each preferably have a D90 of 10 µm or greater, more preferably 30 µm or greater, still more preferably 50 µm or greater, while preferably 600 µm or smaller, more preferably 500 µm or smaller, still more preferably 400 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved tensile properties, the fluororesin compositions (2a) and (2b) each preferably contain a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned as examples for the fluororesin composition (1).

The fluororesin compositions (2a) and (2b) each may be produced, for example, by mixing the powder of the fluororesin A, particles of the fluororesin B2, and the filler. The particles of the fluororesin B2 to be mixed with the powder of the fluororesin A is preferably in the form of powder. The mixing may be performed by any method, such as any of known methods. The mixing may be performed in a pulverizer.

In order to easily provide a fluororesin composition having a much higher apparent density and much better handleability, the maximum linear length of particles of the fluororesin A is preferably smaller than the maximum linear length of particles of the fluororesin B2.

The resulting fluororesin composition may be pulverized. The pulverization may be performed by any known method, such as use of an air jet mill, a hammer mill, a force mill, a millstone pulverizer, or a freeze pulverizer.

The resulting fluororesin composition may be granulated. This can provide a fluororesin composition having a much higher apparent density and much better handleability.

The granulation may be performed by any known method, such as underwater granulation, hot water granulation, emulsification-dispersion granulation, emulsification hot water granulation, solvent-free granulation, or dry solvent granulation.

The first fluororesin composition of the disclosure is also preferably a fluororesin composition (also referred to as a fluororesin composition (3a)) containing: a non-melt-flowable fluororesin A having a history of being heated to a temperature equal to or higher than the melting point thereof; a non-melt-flowable fluororesin B3 having no history of being heated to a temperature equal to or higher than the melting point thereof and being prepared by emulsion polymerization; and a filler, the fluororesin composition having an apparent density of 0.42 g/ml or higher.

The fluororesin composition (3a) contains a fluororesin B3 having no history of being heated to a temperature equal to or higher than the melting point thereof and being prepared by emulsion polymerization and has an apparent density within a specific range. It therefore has excellent handleability (e.g., handleability during transport or compression molding) while containing a fluororesin A having a history of being heated to a temperature equal to or higher than the melting point thereof.

The fluororesin composition (3a) has good tensile properties **(e.g.,** tensile strength at break and tensile strain at break).

The fluororesin composition (3a) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin B3 having no history of being heated to a temperature equal to or higher than the melting point thereof.

The fluororesin A and filler used in the fluororesin composition (3a) may be those described above.

The fluororesin B3 has no history of being heated to a temperature equal to or higher than the melting point thereof.

The fluororesin B3 preferably has a melting point of 100°C to 360°C. The melting point is more preferably 140°C or higher, still more preferably 160°C or higher, while more preferably 355°C or lower, still more preferably 350°C or lower.

The fluororesin B3 preferably has one or more melting points within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the absence of a history of being heated to a temperature equal to or higher than the melting point.

In addition to the above melting point, the fluororesin B3 may also have a melting point within a temperature range lower than 333°C.

The fluororesin B3 is non-melt-flowable. The term "melt-flowable" is defined as described above.

The fluororesin B3 is preferably PTFE. The PTFE may be a high molecular weight PTFE.

Preferably, the PTFE (high molecular weight PTFE) as a fluororesin B3 has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B3 preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to a temperature equal to or higher than the melting point thereof, the term "high molecular weight" means that the standard specific gravity falls within the above range.

The PTFE as a fluororesin B3 commonly has non-melt secondary processibility. The term "non-melt secondary processibility" is defined as described above.

The PTFE as a fluororesin B3 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

In order to achieve much improved handleability and much improved tensile properties of the fluororesin composition, a modified PTFE is preferred.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B3 include those described as examples for the PTFE (high molecular weight PTFE) as a fluororesin **A.**

The fluororesin B3 is produced by emulsion polymerization. The non-melt-flowable fluororesin B3 prepared by emulsion polymerization may be one satisfying any of the following properties, and preferably satisfies all of the following properties:
(i) the proportion of particles (primary particles) having a particle size of 1 µm or smaller, which is obtained by image processing using a scanning electron microscope (SEM), is higher than 50%, preferably higher than 70%, more preferably higher than 90%; and
(ii) the amount of an anionic fluorine-containing surfactant, which is determined using a liquid chromatograph-mass spectrometer (LC/MS/MS) on a Soxhlet extract with methanol, is 1 ppb by mass or more.

The emulsion polymerization may be performed by a known method. For example, monomers to form a fluororesin B3 are emulsion-polymerized in an aqueous medium in the presence of an anionic fluorine-containing surfactant and a polymerization initiator, whereby an aqueous dispersion containing particles (primary particles) of the fluororesin B3 is obtained. The emulsion polymerization may be accompanied by appropriate use of additives such as a chain transfer agent, a buffer, a pH adjuster, a stabilization aid, and a dispersion stabilizer.

The aqueous dispersion may contain a hydrocarbon surfactant. The hydrocarbon surfactant is preferably free from a fluorine atom. The hydrocarbon surfactant may be one used in the emulsion polymerization or may be one added after the emulsion polymerization.

Examples of the hydrocarbon surfactant include those mentioned as examples for the fluororesin composition (1).

In order to produce a fluororesin composition suffering much less coloring and having much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

The above aqueous dispersion may be used to provide a fluororesin B3.

Alternatively, the aqueous dispersion may be subjected to coagulation and drying to provide a powder containing particles of the fluororesin B3. This powder may be used to provide a fluororesin B3.

Coagulation and drying may be performed by any known techniques.

The fluororesin composition (3a) may contain particles of the fluororesin B3. The particles of the fluororesin B3 may be either primary particles or secondary particles of the fluororesin B3.

In order to achieve much improved handleability of the fluororesin composition, the secondary particles of the fluororesin B3 preferably have an average secondary particle size of 1000 µm or smaller. The average secondary particle size is more preferably 900 µm or smaller, still more preferably 800 µm or smaller, particularly preferably 700 µm or smaller. The average secondary particle size is also preferably 100 µm or greater, more preferably 200 µm or greater, still more preferably 300 µm or greater, particularly preferably 400 µm or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved handleability of the fluororesin composition, the particles of the fluororesin B3 preferably have a D90 of 10 µm or greater, more preferably 30 µm or greater, still more preferably 50 µm or greater, while preferably 2000 µm or smaller, more preferably 1500 µm or smaller, still more preferably 1200 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (3a) has an apparent density of 0.42 g/ml or higher. The fluororesin composition (3a) having an apparent density within this range has excellent handleability.

In order to achieve much better handleability, the apparent density is preferably 0.45 g/ml or higher, more preferably 0.47 g/ml or higher. The upper limit may be, but is not limited to, 1.00 g/ml.

The apparent density is determined in conformity with JIS K6891.

In order to achieve much improved tensile properties, the amount of the fluororesin A in the fluororesin composition (3a) is preferably 10 to 90% by mass of the fluororesin composition. The amount is more preferably 20% by mass or more, still more preferably 30% by mass or more, further preferably 40% by mass or more, even more preferably 50% by mass or more, particularly preferably more than 50% by mass, while more preferably 85% by mass or less, still more preferably 80% by mass or less, further preferably less than 80% by mass, even more preferably 75% by mass or less, particularly preferably 70% by mass or less.

In order to achieve much improved tensile properties, the amount of the fluororesin B3 in the fluororesin composition (3a) is preferably 10 to 90% by mass of the fluororesin composition. The amount is more preferably 15% by mass or more, still more preferably 20% by mass or more, further preferably more than 20% by mass, even more preferably 25% by mass or more, particularly preferably 30% by mass or more, while more preferably 80% by mass or less, still more preferably 70% by mass or less, further preferably 60% by mass or less, even more preferably 50% by mass or less, particularly preferably less than 50% by mass.

The total amount of the fluororesins A and B3 in the fluororesin composition (3a) is preferably 80% by mass or more, more preferably 85% by mass or more, still more preferably 90% by mass or more, further preferably 95% by mass or more, particularly preferably 98% by mass or more of the fluororesin composition.

Preferably, the fluororesin composition (3a) contains a TFE unit and a modifying monomer unit based on a modifying monomer copolymerizable with TFE and the modifying monomer unit is present in an amount of 1.0% by mass or less of all polymerized units. The TFE unit is preferably present in an amount of 99.0% by mass or more.

The lower limit of the amount of the modifying monomer unit in the fluororesin composition (3a) may be 0% by mass, and is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The amount of the modifying monomer unit can be calculated by appropriate combination of NMR, FT-IR, elemental analysis, and X-ray fluorescence analysis in accordance with the type of the monomer. In the case where the composition of materials is known, the amounts may be calculated from the composition of materials.

The disclosure also preferably provides a fluororesin composition (also referred to as a fluororesin composition (3b)) containing: a non-melt-flowable fluororesin A having a history of being heated to a temperature equal to or higher than the melting point thereof; a non-melt-flowable fluororesin B3 having no history of being heated to a temperature equal to or higher than the melting point thereof and being prepared by emulsion polymerization; and a filler, the fluororesin composition containing a TFE unit and a modifying monomer unit based on a modifying monomer copolymerizable with TFE.

The fluororesin composition (3b) has a specific composition of monomers and therefore has excellent handleability (e.g., handleability during transport or compression molding) while containing a fluororesin A having a history of being heated to the melting point thereof or higher.

The fluororesin composition (3b) has good tensile properties (e.g., tensile strength at break and tensile strain at break).

The fluororesin composition (3b) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin B3 having no history of being heated to a temperature equal to or higher than the melting point thereof.

Examples of the fluororesin A in the fluororesin composition (3b) include those for the fluororesin A in the fluororesin composition (3a).

Examples of the fluororesin B3 in the fluororesin composition (3b) include those for the fluororesin B3 in the fluororesin composition (3a), and preferred is a modified PTFE containing 99.0% by mass or more of a polymerized unit based on TFE (TFE unit) and 1.0% by mass or less of a polymerized unit based on a modifying monomer (modifying monomer unit). The fluororesin B3 may consist only of a TFE unit and a modifying monomer unit.

Examples of the modifying monomer include the monomers described above for the modified PTFE as a fluororesin B3 in the fluororesin composition (3a). A preferred range of the amount of the modifying monomer unit is also the same as the range described for the fluororesin composition (3a).

The fluororesin B3 in the fluororesin composition (3b) is the same as the fluororesin B3 in the fluororesin composition (3a) except for the composition thereof.

The fluororesin composition (3b) contains a TFE unit and a modifying monomer unit based on a modifying monomer copolymerizable with TFE. The fluororesin composition (3b) may consist only of a TFE unit and a modifying monomer unit as the polymerized units.

In order to achieve much improved handleability and much improved tensile properties of the fluororesin composition, the modifying monomer unit is preferably contained in an amount of 1.0% by mass or less of all polymerized units of the fluororesin composition. The lower limit of the amount of the modifying monomer unit is preferably 0.00001% by mass, more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The fluororesin composition (3b) preferably contains the TFE unit in an amount of 99.0% by mass or more of all polymerized units.

The amounts of the respective polymerized units of the fluororesin composition (3b) can be calculated by appropriate combination of NMR, FT-IR, elemental analysis, and X-ray fluorescence analysis in accordance with the types of the monomers. In the case where the composition of materials is known, the amounts may be calculated from the composition of materials.

The amounts of the fluororesins A and B3 in the fluororesin composition (3b) as well as the total amount of the fluororesins A and B3 are the same as the respective amounts described for the fluororesin composition (3a).

In order to achieve much better handleability, the fluororesin composition (3b) preferably has an apparent density of 0.42 g/ml or higher, more preferably 0.45 g/ml or higher, still more preferably 0.47 g/ml or higher. The upper limit may be, but is not limited to, 1.00 g/ml.

The apparent density is determined in conformity with JIS K6891.

The fluororesin compositions (3a) and (3b) may be in any form, and are each preferably in the form of powder.

The fluororesin compositions (3a) and (3b) each may be one satisfying any of the following properties, and preferably satisfy all of the following properties:
(i) the proportion of particles (primary particles) having a particle size of 1 µm or smaller, which is obtained by image processing using a scanning electron microscope (SEM), is higher than 50%, preferably higher than 70%, more preferably higher than 90%; and
(ii) the amount of an anionic fluorine-containing surfactant, which is determined using a liquid chromatograph-mass spectrometer (LC/MS/MS) on a Soxhlet extract with methanol, is 1 ppb by mass or more.

In order to achieve excellent flowability and much better handleability, the fluororesin compositions (3a) and (3b) each preferably have an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The fluororesin compositions (3a) and (3b) each preferably have an average secondary particle size of 50 to 500 µm. The average secondary particle size is more preferably 70 µm or greater, still more preferably 100 µm or greater, while more preferably 300 µm or smaller, still more preferably 200 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin compositions (3a) and (3b) each preferably have a D90 of 10 µm or greater, more preferably 30 µm or greater, still more preferably 50 µm or greater, particularly preferably 100 µm or greater, while preferably 800 µm or smaller, more preferably 600 µm or smaller, still more preferably 500 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved tensile properties, the fluororesin compositions (3a) and (3b) each preferably contain a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned as examples for the fluororesin composition (1).

The fluororesin compositions (3a) and (3b) each may be produced, for example, by mixing the powder of the fluororesin A, particles of the fluororesin B3, and the filler.

The particles of the fluororesin B3 to be mixed with the powder of the fluororesin A may be in the form of powder or may be in the form of aqueous dispersion. In order to produce a fluororesin composition having much improved handleability and much improved tensile properties, the particles of the fluororesin B3 to be mixed with the powder of the fluororesin A are preferably in the form of powder.

The mixing may be performed using a pulverizer provided with a rotating blade, for example. An example of the pulverizer provided with a rotating blade is Wonder Crusher WC-3 available from Osaka Chemical Co., Ltd.

In the mixing with this pulverizer, the rotating frequency of the blade is preferably set to 1500 to 10000 rpm. A rotating frequency within this range can lead to a reduced shearing force during mixing and reduced fiberization of the fluororesin B3, resulting in a fluororesin composition having a high apparent density and excellent handleability. In the case where the fluororesin B3 is a TFE homopolymer, the rotating frequency is preferably set to 1500 to 2500 rpm.

Granulating the fluororesin composition after mixing can also provide a fluororesin composition having a high apparent density and excellent handleability. In this embodiment, the mixing may be performed under conditions where the fluororesin B3 is easily fiberized.

The granulation may be performed by any known method, such as underwater granulation, hot water granulation, emulsification-dispersion granulation, emulsification hot water granulation, solvent-free granulation, or dry solvent granulation.

The resulting fluororesin composition may be pulverized. The pulverization may be performed by any known method, such as use of an air jet mill, a hammer mill, a force mill, a millstone pulverizer, or a freeze pulverizer.

The first fluororesin composition of the disclosure is also preferably a fluororesin composition (also referred to as a fluororesin composition (4)) containing: a non-melt-flowable fluororesin A having a history of being heated to a temperature equal to or higher than the melting point thereof; a non-melt-flowable fluororesin B4 having no history of being heated to a temperature equal to or higher than the melting point thereof; and a filler, the fluororesin composition containing a TFE unit and a modifying monomer unit based on a modifying monomer copolymerizable with TFE.

The fluororesin composition (4) has a specific composition of monomers and therefore has excellent handleability (e.g., handleability during transport or compression molding) while containing a fluororesin A having a history of being heated to the melting point thereof or higher.

The fluororesin composition (4) also has excellent tensile properties (e.g., tensile strength at break and tensile strain at break).

The fluororesin composition (4) preferably has one or more melting points within a temperature range lower than 333°C and one or more melting points within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof and a non-melt-flowable fluororesin B4 having no history of being heated to a temperature equal to or higher than the melting point thereof.

The fluororesin A and filler used in the fluororesin composition (4) may be those described above.

The fluororesin B4 has no history of being heated to a temperature equal to or higher than the melting point thereof.

The fluororesin B4 preferably has a melting point of 100°C to 360°C. The melting point is more preferably 140°C or higher, still more preferably 160°C or higher, while more preferably 355°C or lower, still more preferably 350°C or lower.

The fluororesin B4 preferably has one or more melting points within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the absence of a history of being heated to a temperature equal to or higher than the melting point.

In addition to the above melting point, the fluororesin B4 may also have a melting point within a temperature range lower than 333°C.

The fluororesin B4 is non-melt-flowable. The term "melt-flowable" is defined as described above.

The fluororesin B4 is preferably PTFE. The PTFE may be a high molecular weight PTFE.

Preferably, the PTFE (high molecular weight PTFE) as a fluororesin B4 has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B4 preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to a temperature equal to or higher than the melting point thereof, the term "high molecular weight" means that the standard specific gravity falls within the above range.

The PTFE as a fluororesin B4 commonly has non-melt secondary processibility. The term "non-melt secondary processibility" is defined as described above.

In order to provide a fluororesin composition having much higher apparent density and much better handleability and to provide a fluororesin composition having much better tensile properties, the PTFE as a fluororesin B4 is preferably a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B4 include those described as examples for the PTFE (high molecular weight PTFE) as a fluororesin A.

The fluororesin B4 can be produced by suspension polymerization or emulsion polymerization.

The suspension polymerization may be performed by any known method. For example, monomers necessary to form a fluororesin B4 are polymerized while a polymerization initiator is dispersed in an aqueous medium using no or a limited amount of anionic fluorine-containing surfactant, whereby a granular powder of the fluororesin B4 can be directly isolated.

The fluororesin B4 used may be a powder directly obtained by the suspension polymerization, or this powder may be pulverized and/or granulated into a powder of the fluororesin B4.

The pulverization may be performed by any known method, such as a method in which the powder is pulverized using a pulverizer such as a hammer mill, a pin mill, a jet mill, or a cutting mill.

Also, the granulation may be performed by any known method, such as underwater granulation, hot water granulation, emulsification-dispersion granulation, emulsification hot water granulation, solvent-free granulation, or dry solvent granulation.

The emulsion polymerization may be performed by a known method. For example, monomers to form a fluororesin B4 are emulsion-polymerized in an aqueous medium in the presence of an anionic fluorine-containing surfactant and a polymerization initiator, whereby an aqueous dispersion containing particles (primary particles) of the fluororesin B4 is obtained. The emulsion polymerization may be accompanied by appropriate use of additives such as a chain transfer agent, a buffer, a pH adjuster, a stabilization aid, and a dispersion stabilizer.

The aqueous dispersion may contain a hydrocarbon surfactant. The hydrocarbon surfactant is preferably free from a fluorine atom. The hydrocarbon surfactant may be one used in the emulsion polymerization or may be one added after the emulsion polymerization.

Examples of the hydrocarbon surfactant include those mentioned as examples for the fluororesin composition (1).

In order to produce a fluororesin composition suffering much less coloring and having much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

The above aqueous dispersion may be used to provide a fluororesin B4.

Alternatively, the aqueous dispersion may be subjected to coagulation and drying to provide a powder containing particles of the fluororesin B4. This powder may be used to provide a fluororesin B4.

Coagulation and drying may be performed by any known techniques.

The fluororesin composition (4) may contain particles of the fluororesin B4. The particles of the fluororesin B4 may be secondary particles of the fluororesin B4.

The particles of the fluororesin B4 preferably have an average secondary particle size of 1 to 1000 µm. The average secondary particle size is also more preferably 5 µm or greater, still more preferably 10 µm or greater, further preferably 20 µm or greater, while more preferably 900 µm or smaller, still more preferably 800 µm or smaller, further preferably 700 µm.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin B4 preferably have a D90 of 10 µm or greater, more preferably 30 µm or greater, still more preferably 50 µm or greater, while preferably 2000 µm or smaller, more preferably 1500 µm or smaller, still more preferably 1200 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (4) contains a TFE unit and a modifying monomer unit based on a modifying monomer copolymerizable with TFE. The fluororesin composition (4) may consist only of a TFE unit and a modifying monomer unit as the polymerized units.

In order to achieve much improved handleability and much improved tensile properties, the modifying monomer unit is preferably contained in an amount of 1.0% by mass or less of all polymerized units of the fluororesin composition. The lower limit of the amount of the modifying monomer unit is preferably 0.00001% by mass, more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The fluororesin composition (4) preferably contains the TFE unit in an amount of 99.0% by mass or more of all polymerized units.

The amounts of the respective polymerized units of the fluororesin composition (4) can be calculated by appropriate combination of NMR, FT-IR, elemental analysis, and X-ray fluorescence analysis in accordance with the types of the monomers. In the case where the composition of materials is known, the amounts may be calculated from the composition of materials.

In order to achieve much better handleability, the fluororesin composition (4) preferably has an apparent density of 0.40 g/ml or higher, more preferably 0.42 g/ml or higher, still more preferably 0.45 g/ml or higher, particularly preferably 0.47 g/ml or higher. The upper limit may be, but is not limited to, 1.00 g/ml.

The apparent density is determined in conformity with JIS K6891.

In order to achieve much improved tensile properties, the amount of the fluororesin A in the fluororesin composition (4) is preferably 10 to 90% by mass of the fluororesin composition. The amount is more preferably 20% by mass or more, still more preferably 30% by mass or more, further preferably 40% by mass or more, particularly preferably 50% by mass or more, while more preferably 85% by mass or less, still more preferably 80% by mass or less, further preferably less than 80% by mass, even more preferably 75% by mass or less, particularly preferably 70% by mass or less.

In order to achieve much improved tensile properties, the amount of the fluororesin B4 in the fluororesin composition (4) is preferably 10 to 90% by mass of the fluororesin composition. The amount is more preferably 15% by mass or more, still more preferably 20% by mass or more, further preferably more than 20% by mass, even more preferably 25% by mass or more, particularly preferably 30% by mass or more, while more preferably 80% by mass or less, still more preferably 70% by mass or less, further preferably 60% by mass or less, particularly preferably 50% by mass or less.

The total amount of the fluororesins A and B4 in the fluororesin composition (4) is preferably 80% by mass or more, more preferably 85% by mass or more, still more preferably 90% by mass or more, further preferably 95% by mass or more, particularly preferably 98% by mass or more of the fluororesin composition.

The fluororesin composition (4) may be in any form, and is preferably in the form of powder.

In the fluororesin composition (4), particles of the fluororesin A preferably have a smaller maximum linear length than particles of the fluororesin B4. This relationship between the maximum linear lengths of the particles of the fluororesins A and B4 can lead to a high apparent density of the fluororesin composition, resulting in much improved handleability. This relationship can also eliminate the need for a change in the shape of the particles of the fluororesin A to achieve a greater maximum linear length, reducing the cost of producing the fluororesin composition.

This embodiment is particularly preferred in the case where the fluororesin B4 is obtainable by suspension polymerization.

In order to achieve excellent flowability and much better handleability, the fluororesin composition (4) preferably has an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The fluororesin composition (4) preferably has an average secondary particle size of 5 to 700 µm. The average secondary particle size is more preferably 10 µm or greater, still more preferably 20 µm or greater, while more preferably 600 µm or smaller, still more preferably 500 µm or smaller, particularly preferably 400 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (4) preferably has a D90 of 10 µm or greater, more preferably 30 µm or greater, still more preferably 50 µm or greater, while preferably 600 µm or smaller, more preferably 500 µm or smaller, still more preferably 400 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved tensile properties, the fluororesin composition (4) preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned as examples for the fluororesin composition (1).

The fluororesin composition (4) may be produced, for example, by mixing the powder of the fluororesin A, particles of the fluororesin B4, and the filler.

In the case where the particles of the fluororesin B4 to be mixed with the powder of the fluororesin A are prepared by suspension polymerization, they are preferably in the form of powder. The mixing may be performed by any method, such as any of known methods. The mixing may be performed in a pulverizer.

In order to easily provide a fluororesin composition having a much higher apparent density and much better handleability, the maximum linear length of particles of the fluororesin A is preferably smaller than the maximum linear length of particles of the fluororesin B4.

In the case where the particles of the fluororesin B4 to be mixed with the powder of the fluororesin A are produced by emulsion polymerization, they may be in the form of powder or may be in the form of aqueous dispersion. In order to produce a fluororesin composition having much improved handleability and much improved tensile properties, the particles of the fluororesin B4 to be mixed with the powder of the fluororesin A are preferably in the form of powder.

The mixing may be performed using a pulverizer provided with a rotating blade, for example. An example of the pulverizer provided with a rotating blade is Wonder Crusher WC-3 available from Osaka Chemical Co., Ltd.

In the mixing with this pulverizer, the rotating frequency of the blade is preferably set to 1500 to 10000 rpm. A rotating frequency within this range can lead to a reduced shearing force during mixing and reduced fiberization of the fluororesin B4, resulting in a fluororesin composition having a high apparent density and excellent handleability.

Granulating the fluororesin composition after mixing can also provide a fluororesin composition having a high apparent density and excellent handleability. In this embodiment, the mixing may be performed under conditions where the fluororesin B4 is easily fiberized.

The granulation may be performed by any known method, such as underwater granulation, hot water granulation, emulsification-dispersion granulation, emulsification hot water granulation, solvent-free granulation, or dry solvent granulation.

The resulting fluororesin composition may be pulverized. The pulverization may be performed by any known method, such as use of an air jet mill, a hammer mill, a force mill, a millstone pulverizer, or a freeze pulverizer.

The first fluororesin composition of the disclosure is also preferably a fluororesin composition (also referred to as a fluororesin composition (5)) containing: a non-melt-flowable fluororesin A having a history of being heated to a temperature equal to or higher than the melting point thereof; a fluororesin B5 having no history of being heated to a temperature equal to or higher than the melting point thereof; and a filler, the fluororesin composition containing microparticles with a primary particle size of 1 µm or smaller.

The fluororesin composition (5) contains a fluororesin having no history of being heated to a temperature equal to or higher than the melting point thereof and microparticles having a specific particle size and therefore suffers less coloring and has excellent tensile properties while containing a fluororesin having a history of being heated to the melting point thereof or higher.

The fluororesin composition (5) preferably has one or more melting points within a temperature range lower than 333°C and one or more melting points within a temperature range not lower than 333°C.

The temperature range lower than 333°C is more preferably lower than 332°C, still more preferably lower than 331°C, while preferably 100°C or higher, more preferably 140°C or higher, still more preferably 160°C or higher.

The temperature range not lower than 333°C is more preferably 334°C or higher, still more preferably 335°C, while preferably 360°C or lower, more preferably 355°C or lower, still more preferably 350°C or lower.

The presence of the melting points in the two respective temperature ranges indicates that the fluororesin composition contains a non-melt-flowable fluororesin A having a history of being heated to a temperature equal to or higher than the melting point thereof (preferably PTFE) and a fluororesin B5 having no history of being heated to a temperature equal to or higher than the melting point thereof (preferably a non-melt-flowable fluororesin, more preferably PTFE).

The fluororesin A and filler used in the fluororesin composition (5) may be those described above.

The fluororesin B5 has no history of being heated to a temperature equal to or higher than the melting point thereof.

The fluororesin B5 preferably has a melting point of 100°C to 360°C. The melting point is more preferably 140°C or higher, still more preferably 160°C or higher, while more preferably 355°C or lower, still more preferably 350°C or lower.

The fluororesin B5 preferably has one or more melting points within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates that the fluororesin B5 (preferably a non-melt-flowable fluororesin, more preferably PTFE) has no history of being heated to a temperature equal to or higher than the melting point or higher.

In addition to the above melting point, the fluororesin B5 may also have a melting point within a temperature range lower than 333°C.

Examples of the fluororesin B5 include PTFE, PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE.

The PTFE as a fluororesin B5 is non-melt-flowable. The PTFE may be a high molecular weight PTFE.

Preferably, the PTFE (high molecular weight PTFE) as a fluororesin B5 has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B5 preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to a temperature equal to or higher than the melting point thereof, the term "high molecular weight" means that the standard specific gravity falls within the above range.

The PTFE as a fluororesin B5 commonly has non-melt secondary processibility. The term "non-melt secondary processibility" is defined as described above.

The PTFE as a fluororesin B5 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B5 include those described as examples for the PTFE (high molecular weight PTFE) as a fluororesin A.

The low molecular weight PTFE as a fluororesin B5 is melt-flowable. The low molecular weight PTFE has a melt viscosity (complex viscosity) at 380°C of 1.0 × 10¹ to 1.0 × 10⁷ Pa·s. The melt viscosity is preferably 1.0 × 10² or higher, more preferably 1.5 × 10³ Pa·s or higher, still more preferably 7.0 × 10³ Pa·s or higher, while preferably 7.0 × 10⁵ or lower, more preferably 3.0 × 10⁵ Pa·s or lower, still more preferably 1.0 × 10⁵ Pa·s or lower.

The "low molecular weight PTFE" herein means PTFE having a melt viscosity within the above range.

The melt viscosity is a value determined by heating a 2-g sample at 380°C for five minutes in advance and then keeping the sample at this temperature under a load of 0.7 MPa using a flow tester (available from Shimadzu Corp.) and a 2ϕ-8 L die in conformity with ASTM D1238.

The low molecular weight PTFE as a fluororesin B5 preferably has a melting point of 320°C to 340°C. The melting point is more preferably 324°C or higher, while more preferably 336°C or lower, still more preferably 333°C or lower, further preferably 332°C or lower, even more preferably 331°C or lower, particularly preferably 330°C or lower.

The low molecular weight PTFE as a fluororesin B5 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer to be used in the low molecular weight PTFE as a fluororesin B5 include the monomers described above for the PTFE (high molecular weight PTFE) as a non-melt-flowable fluororesin.

The fluororesin B5 may be a non-melt-flowable fluororesin or may be a melt-flowable fluororesin.

The non-melt-flowable fluororesin is preferably the aforementioned PTFE (high molecular weight PTFE).

Examples of the melt-flowable fluororesin include the same fluororesins as those mentioned for the fluororesin B1.

The fluororesin B5 is preferably a non-melt-flowable fluororesin, more preferably PTFE (high molecular weight PTFE).

The fluororesin B5 may be a melt-flowable fluororesin and preferably includes at least one selected from the group consisting of PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE. More preferred is at least one selected from the group consisting of PFA, FEP, and low molecular weight PTFE, still more preferred is at least one selected from the group consisting of PFA and FEP.

The fluororesin composition (5) may contain particles of the fluororesin B5.

The particles of the fluororesin B5 are preferably primary particles of the fluororesin B5. Preferably, the primary particles do not form secondary particles.

The particles of the fluororesin B5 preferably have an average primary particle size of 1 µm or smaller. The average primary particle size is more preferably 500 nm or smaller, still more preferably 450 nm or smaller, further preferably 400 nm or smaller, even more preferably 350 nm or smaller, particularly preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

Alternatively, the average primary particle size may be an average of the diameters of 100 or more primary particles randomly selected by observing the fluororesin composition using a scanning electron microscope (SEM).

In an embodiment of the fluororesin composition (5), the particles of the fluororesin B5 preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The average aspect ratio may be 1.0 or higher.

The average aspect ratio is determined as follows. Specifically, the fluororesin composition is observed using a scanning electron microscope (SEM) and 100 or more primary particles randomly selected are imaged. The ratio of the major and minor axes of each particle is then obtained and the average thereof is defined as the average aspect ratio.

In another embodiment of the fluororesin composition (5), the particles of the fluororesin B5 having an aspect ratio of 2.5 or higher are preferably in a proportion of 0.5% or more, more preferably 1.0% or more, still more preferably 1.5% or more, particularly preferably 2.0% or more of all particles of the fluororesin B5. The proportion is also preferably 20% or less, more preferably 15% or less, still more preferably 10% or less.

The proportion is determined as follows. Specifically, the fluororesin composition is observed using a scanning electron microscope (SEM) and 100 or more primary particles randomly selected are imaged. The aspect ratio of each particle is then calculated and the proportion of the particles of interest is defined relative to the total number of the particles selected.

In order to much reduce coloring and to much improve the tensile properties, the fluororesin A and the fluororesin B5 preferably have a mass ratio (A/B5) of 1/99 to 90/10.

The mass ratio A/B5 is more preferably 3/97 or higher, still more preferably 5/95 or higher, further preferably 10/90 or higher, particularly preferably 15/85 or higher. The mass ratio A/B5 is also more preferably 85/15 or lower, still more preferably 80/20 or lower, further preferably 75/25 or lower, particularly preferably 70/30 or lower.

The total amount of the fluororesins A and B5 in the fluororesin composition (5) is preferably 80% by mass or more, more preferably 85% by mass or more, still more preferably 90% by mass or more, further preferably 95% by mass or more, particularly preferably 98% by mass or more of the fluororesin composition.

The fluororesin composition (5) contains microparticles having a primary particle size of 1 µm or smaller.

The microparticles are particles of the fluororesin(s) to form the fluororesin composition, which may be particles of at least one selected from the group consisting of the fluororesin A and the fluororesin B5, and are preferably particles of the fluororesin B5.

The microparticles may be primary particles and are preferably primary particles of the fluororesin B5.

The microparticles preferably have a primary particle size of 500 nm or smaller, more preferably 450 nm or smaller, still more preferably 400 nm or smaller, further preferably 350 nm or smaller, particularly preferably 300 nm or smaller. The primary particle size is preferably 10 nm or greater, more preferably 25 nm or greater, still more preferably 50 nm or greater, further preferably 100 nm or greater, particularly preferably 150 nm or greater.

The primary particle size is an average of the diameters of 100 or more microparticles randomly selected by observing the fluororesin composition using a scanning electron microscope (SEM).

In an embodiment of the fluororesin composition (5), the microparticles preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The aspect ratio may be 1.0 or higher.

The average aspect ratio is determined as follows. Specifically, the fluororesin composition is observed using a scanning electron microscope (SEM) and 100 or more microparticles randomly selected are imaged. The ratio of the major and minor axes of each particle is then obtained and the average thereof is defined as the average aspect ratio.

In another embodiment of the fluororesin composition (5), the microparticles having an aspect ratio of 2.5 or higher are preferably in a proportion of 0.5% or more, more preferably 1.0% or more, still more preferably 1.5% or more, particularly preferably 2.0% or more of all microparticles. The proportion is also preferably 20% or less, more preferably 15% or less, still more preferably 10% or less.

The proportion is determined as follows. Specifically, the fluororesin composition is observed using a scanning electron microscope (SEM) and 100 or more microparticles randomly selected are imaged. The aspect ratio of each particle is then calculated and the proportion of the particles of interest is defined relative to the total number of the microparticles selected.

The fluororesin composition (5) preferably contains a coarse powder having a particle size of 5 µm or greater.

The coarse powder is a mass of particles of the fluororesin(s) to form the fluororesin composition, which may be particles of at least one selected from the group consisting of the fluororesin A and the fluororesin B5, and are preferably particles of the fluororesin A.

The coarse powder may be a mass of secondary particles and may be mass of secondary particles of the fluororesin A.

The coarse powder has a particle size of more preferably 10 µm or greater, while preferably 600 µm or smaller, more preferably 500 µm or smaller, still more preferably 400 µm or smaller.

The particle size of the coarse powder is a particle size determined based on the particle size distribution by volume determined in dry measurement using a laser diffraction particle size distribution analyzer (LS13 320) available from Beckman Coulter, Inc. at a vacuum pressure of 20 mH₂O.

In the fluororesin composition (5), preferably, the microparticles adhere to surfaces of the coarse powder with 60% or less of the surfaces of the coarse powder being exposed. This can much reduce coloring and much improve the tensile properties such as tensile strength at break and tensile strain at break.

The percentage of the exposed surfaces is more preferably 55% or less, still more preferably 50% or less.

The percentage of the exposed surfaces is calculated as follows. Specifically, the fluororesin composition is observed using a scanning electron microscope (SEM) to yield a 5000x image and the area of the surfaces of the coarse powder not covered with the microparticles is divided by the area of the surfaces of the coarse powder.

The fluororesin composition (5) preferably has an average secondary particle size of 5 to 500 µm. The average secondary particle size is more preferably 10 µm or greater, still more preferably 25 µm or greater, while more preferably 450 µm or smaller, still more preferably 400 µm or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition (5) preferably has a D90 of 50 µm or greater, more preferably 70 µm or greater, still more preferably 100 µm or greater, while preferably 800 µm or smaller, more preferably 700 µm or smaller, still more preferably 650 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to much reduce coloring and to much improve the tensile properties, the fluororesin composition (5) preferably contains a nonionic surfactant in an amount of 1.0% by mass or less, more preferably 0.9% by mass or less, still more preferably 0.8% by mass or less, further preferably 0.7% by mass or less, particularly preferably 0.6% by mass or less of the fluororesin composition. The lower limit thereof may be, but is not limited to, lower than the detection limit or may be 1000 ppm by mass.

The amount of the nonionic surfactant is determined as follows. Specifically, 1 g of the fluororesin composition freeze-pulverized is ultrasonically extracted in 10 mL of methanol at 60°C and the amount is determined in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003".

The fluororesin composition (5) also preferably contains no nonionic surfactant and also preferably contains no hydrocarbon surfactant.

Examples of the nonionic surfactant and the hydrocarbon surfactant include those mentioned as examples for the fluororesin composition (1).

With regard to the amount of matter obtained by ultrasonically extracting 1 g of the freeze-pulverized fluororesin composition in 10 mL of methanol at 60°C and determining the absorbance in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003", this amount in the fluororesin composition (5) is preferably 1.0% by mass or less, more preferably 0.9% by mass or less, still more preferably 0.8% by mass or less, further preferably 0.7% by mass or less, particularly preferably 0.6% by mass or less of the fluororesin composition so as to much reduce coloring and to much improve the tensile properties. The lower limit thereof may be, but is not limited to, lower than the detection limit or may be 1000 ppm by mass.

The amount of matter within this range indicates that no nonionic surfactant is contained in the fluororesin composition or, even if contained, a significantly small amount thereof is contained therein.

T In order to achieve much less coloring and much improved tensile properties, the fluororesin composition (5) preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned as examples for the fluororesin composition (1).

The fluororesin composition (5) may be in any form, and is preferably in the form of powder.

The fluororesin composition (5) can be produced by a method for producing a fluororesin composition (hereinafter, also referred to as a first production method), the method including: mixing a powder of a fluororesin A and an aqueous dispersion containing particles of a fluororesin B5 and having a solid concentration of 70% by mass or lower to provide a mixture (hereinafter, also referred to as a mixing step); drying the mixture (hereinafter, also referred to as a drying step); and adding a filler.

In the first production method, an aqueous dispersion used has a solid concentration of 70% by mass or lower. Thus, the powder of the fluororesin A and the particles of the fluororesin B5 are uniformly mixed with each other. This results in production of a fluororesin composition suffering less coloring and having excellent tensile properties (e.g., tensile strength at break and tensile strain at break) while containing a fluororesin having a history of being heated to a temperature equal to or higher than the melting point thereof.

The particles of the fluororesin B5 are preferably contained in an amount of 50% by mass or more, more preferably 60% by mass or more, still more preferably 80% by mass or more, further preferably 90% by mass or more, particularly preferably 95% by mass or more, most preferably 98% by mass or more of the solid content of the aqueous dispersion.

The aqueous dispersion in the first production method commonly contains an aqueous medium. The aqueous dispersion may be one in which the particles of the fluororesin B5 are dispersed in an aqueous medium.

The aqueous medium means a liquid containing water. The aqueous medium may be any one containing water, and may be one containing water as well as, for example, a fluorine-free organic solvent such as alcohol, ether, and ketone and/or a fluorine-containing organic solvent having a boiling point of 40°C or lower. The aqueous medium preferably contains 90% by mass or more, more preferably 95% by mass or more of water.

The aqueous dispersion has a solid concentration of 70% by mass or lower. In order to produce a fluororesin composition suffering much less coloring and having much better tensile properties, the solid concentration is preferably 50% by mass or lower, more preferably 45% by mass or lower, still more preferably 40% by mass or lower, further preferably 35% by mass or lower. The solid concentration is also preferably 1% by mass or higher, more preferably 5% by mass or higher, still more preferably 10% by mass or higher.

The solid concentration is calculated as follows. Specifically, about 1 g (X g) of the aqueous dispersion is put into a 5-cm-diameter aluminum cup and heated at 110°C for 30 minutes, so that a heating residue (Y g) is obtained. The resulting heating residue (Y g) is further heated at 300°C for 30 minutes, so that a heating residue (Z g) is obtained. The solid concentration is determined by the formula: P = (Z/X) × 100 (% by mass).

The aqueous dispersion may contain a hydrocarbon surfactant. The hydrocarbon surfactant is preferably free from a fluorine atom.

Examples of the hydrocarbon surfactant include those described above.

In order to produce a fluororesin composition suffering much less coloring and having much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

In order to produce a fluororesin composition suffering much less coloring and having much better tensile properties, the nonionic surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the nonionic surfactant may also be 1 ppm by mass or more, 10 ppm by mass or more, 100 ppm by mass or more, or 500 ppm by mass or more.

The aqueous dispersion also preferably contains no nonionic surfactant and also preferably contains no hydrocarbon surfactant.

In order to produce a fluororesin composition suffering much less coloring and having much better tensile properties, the aqueous dispersion preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the aqueous dispersion.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned above.

The aqueous dispersion may be produced by emulsion polymerization of monomers to form a fluororesin B5 in an aqueous medium in the presence of an anion surfactant and a polymerization initiator. The emulsion polymerization may be accompanied by appropriate use of additives such as a chain transfer agent, a buffer, a pH adjuster, a stabilization aid, and a dispersion stabilizer.

A person skilled in the art would control the composition and physical properties of the fluororesin B5 as well as the physical properties of the particles by adjusting the conditions for emulsion polymerization.

The aqueous dispersion obtained by emulsion polymerization may be combined with a hydrocarbon surfactant. Examples of the hydrocarbon surfactant include those described above.

The aqueous dispersion obtained by emulsion polymerization or the aqueous dispersion combined with a hydrocarbon surfactant may be brought into contact with an anion exchange resin or a mixed bed containing an anion exchange resin and a cation exchange resin, or may be condensed, or may be treated by both of these treatments. This treatment can remove a low molecular weight fluorine-containing compound.

The anion exchange resin and the mixed bed may be, but are not limited to, known ones. A known method may be used for contact with the anion exchange resin or the mixed bed.

The condensation may be performed by a known method, such as phase separation, centrifugal sedimentation, cloud point concentration, electro-concentration, electrophoresis, filtration by ultrafiltration, filtration with reverse osmosis membrane (RO membrane), or nanofiltration.

An aqueous dispersion immediately after polymerization obtained by the emulsion polymerization (before mixed with a hydrocarbon surfactant) may be fed to the mixing, or an aqueous dispersion mixed with the hydrocarbon surfactant may be fed to the mixing, or an aqueous dispersion obtained by contact or concentration with the ion exchange resin may be fed to the mixing. If the solid concentration is higher than 50% by mass, the aqueous dispersion is to be diluted before use.

In order to produce a fluororesin composition suffering much less coloring and having much better tensile properties, the aqueous dispersion preferably has a viscosity at 25°C of 100 mPa·s or lower, more preferably 50 mPa·s or lower, still more preferably 40 mPa·s or lower, particularly preferably 30 mPa·s or lower. The viscosity may be 0.1 mPa·s or higher.

The viscosity is measured at 25°C using a B-type rotational viscometer (available from Toki Sangyo Co., Ltd., rotor No.2) at a rotational frequency of 60 rpm for a measurement time of 120 seconds.

In order to produce a fluororesin composition suffering much less coloring and having much better tensile properties, the powder of the fluororesin A and the aqueous dispersion were preferably mixed such that the mass ratio of the powder of the fluororesin A to the particles of the fluororesin B5 (A/B5) is 1/99 to 90/10.

The mass ratio A/B5 is more preferably 3/97 or higher, still more preferably 5/95 or higher, further preferably 10/90 or higher, particularly preferably 15/85 or higher. The mass ratio A/B5 is also more preferably 85/15 or lower, still more preferably 80/20 or lower, further preferably 75/25 or lower, particularly preferably 70/30 or lower.

If the mixture obtained by the mixing has too high a solid concentration or viscosity, the mixture may be diluted so that the solid concentration or the viscosity is controlled to fall within the aforementioned range.

The first production method may include a coagulating step of coagulating the mixture obtained in the mixing step. This coagulation may be performed by a method of coagulating emulsified particles by freezing or mechanical shearing force. Stirring may be performed while a coagulating agent is added, such as a water-soluble organic compound, e.g., methanol or acetone, an inorganic salt, e.g., potassium nitrate or ammonium carbonate, or an inorganic acid such as hydrochloric acid, sulfuric acid, or nitric acid. The coagulation may be continuously performed using, for example, an inline mixer.

In the drying step, the mixture obtained in the mixing step is dried, whereby a fluororesin composition is obtained. In the case where the first production method includes the coagulating step, a wet powder obtained by the coagulation is dried.

The drying may be performed by any method, and may be performed by a known method using, for example, vacuum, high frequency waves, or hot air.

The drying temperature is preferably 50°C or higher, more preferably 70°C or higher, still more preferably 100°C or higher, particularly preferably 150°C or higher, while preferably 300°C or lower, more preferably 250°C or lower.

The first production method may include a pulverization step of pulverizing the fluororesin composition obtained in the drying step. The pulverization may be performed by any known method, such as use of an air jet mill, a hammer mill, a force mill, a millstone pulverizer, or a freeze pulverizer.

In the step of adding a filler, the filler may be added to the powder of the fluororesin A1, or may be added to the aqueous dispersion, or may be added to the mixture obtained in the mixing of the powder of the fluororesin A1 and the aqueous dispersion, or may be added to the wet powder obtained in the coagulation, or may be added to the dry powder obtained in the drying.

The fluororesin composition (5) can be produced by a method for producing a fluororesin composition (hereinafter, also referred to as a second production method), the method including: mixing a powder of a fluororesin A and an aqueous dispersion containing particles of a fluororesin B5 and containing no hydrocarbon surfactant to provide a mixture (mixing step); drying the mixture (drying step); and adding a filler.

In the second production method, an aqueous dispersion used contains no hydrocarbon surfactant and thus can reduce coloring or an influence on the physical properties due to remaining of a hydrocarbon surfactant. This results in production of a fluororesin composition suffering less coloring and having excellent tensile properties while containing a fluororesin having a history of being heated to a temperature equal to or higher than the melting point thereof.

The powder of the fluororesin A and the particles of the fluororesin B5 are as described for the first production method.

The aqueous dispersion in the second production method contains no hydrocarbon surfactant. Examples of the hydrocarbon surfactant include those mentioned as examples for the first production method.

The other components and physical properties of the aqueous dispersion may be the same as those described for the first production method.

Preferred embodiments of the mixing step in the second production method are the same as the embodiments described for the first production method.

The drying step in the second production method may be the same as the drying step in the first production method.

Other optional steps to be usable in the second production method and preferred embodiments are the same as those in the first production method.

The first and second production methods also preferably include granulating the obtained fluororesin composition. This can provide a fluororesin composition having a high apparent density and excellent handleability.

The granulation may be performed by any known method, such as underwater granulation, hot water granulation, emulsification-dispersion granulation, emulsification hot water granulation, solvent-free granulation, or dry solvent granulation.

Particularly preferred as the first fluororesin composition of the disclosure are the fluororesin composition (1), the fluororesin composition (2a), the fluororesin composition (2b), the fluororesin composition (3a), the fluororesin composition (3b), and the fluororesin composition (4).

The first fluororesin composition of the disclosure preferably has a tensile strength at break of 8 MPa or higher, more preferably 9 MPa or higher, still more preferably 10 MPa or higher, particularly preferably 13 MPa or higher. The upper limit thereof may be, but is not limited to, 20 MPa, for example.

The tensile strength at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708. The tensile strength at break can be also measured by the following method using a ram extrusion molded article. A molded article is obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article is cut into a plate with dimensions of 2.0 mm thickness, 20 mm width, and 150 mm length. The resulting plate-shaped molded article is punched out to a dumbbell shape, which is used to measure the tensile strength at break in conformity with ASTM D1708.

The first fluororesin composition of the disclosure may have a tensile strain at break of 75% or higher, preferably 150% or higher, more preferably 200% or higher, still more preferably 250% or higher, further preferably 300% or higher, even more preferably 360% or higher, particularly preferably 400% or higher. The upper limit thereof may be, but is not limited to, 600%, for example.

The tensile strain at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708. The tensile strain at break can be also measured by the following method using a ram extrusion molded article. A molded article is obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article is cut into a plate with dimensions of 2.0 mm thickness, 20 mm width, and 150 mm length. The resulting plate-shaped molded article is punched out to a dumbbell shape, which is used to measure the tensile strength at break in conformity with ASTM D1708.

The first fluororesin composition of the disclosure can suitably be used as a molding material. The fluororesin composition may be molded, for example, by compression molding, ram extrusion molding, or isostatic molding, although not limited thereto. Preferred among these are compression molding and ram extrusion molding.

The first fluororesin composition of the disclosure is preferably in the form of a powder for compression molding or ram molding.

The disclosure also provides a molded article (hereafter, also referred to as a first molded article of the disclosure) obtainable by compression-molding and firing, or ram extrusion molding the first fluororesin composition of the disclosure.

The first molded article of the disclosure has excellent tensile properties while containing a fluororesin having a history of being heated to a temperature equal to or higher than the melting point thereof.

The compression molding may be performed, for example, by maintaining the fluororesin composition at a pressure of 10 to 50 MPa for 1 minute to 30 hours.

The firing may be performed, for example, by heating the compression-molded article at a temperature of 350°C to 380°C for 0.5 to 50 hours.

The ram extrusion molding may be performed, for example, by extruding the fluororesin composition under the conditions of a filling length of 70 mm, a pressure of 1 to 50 MPa, a pressurization time of 5 to 90 seconds, and each cycle set to 10 to 120 seconds using a vertical ram extruder (cylinder diameter: ϕ5 to ϕ50 mm) with setting temperatures of 230°C to 330°C in the preheating zone and 320°C to 400°C in the molding zone.

The disclosure also provides a fluororesin composition (hereafter, also referred to as a second fluororesin composition of the disclosure) having one or more endothermic peaks within a range from 320°C to 335°C. The fluororesin composition is to generate a residue in an amount of 15% by mass or less of the fluororesin composition in pyrolysis at 600°C in a nitrogen atmosphere, and the fluororesin composition exhibits electrical conductivity or a thermal conductivity of 0.3 W/m·K or higher.

The second fluororesin composition of the disclosure has the above structure and therefore has excellent tensile properties (e.g., tensile strength at break, tensile strain at break) and excellent handleability (e.g., handleability when in the form of powder).

The second fluororesin composition of the disclosure also exhibits electrical conductivity or thermal conductivity.

The second fluororesin composition of the disclosure has one or more endothermic peaks (melting points) within a range from 320°C to 335°C.

The endothermic peak is preferably 323°C or higher, more preferably 325°C or higher, while preferably 333°C or lower, more preferably 330°C or lower.

The presence of an endothermic peak (melting point) within the above range indicates the presence of a non-melt-flowable fluororesin having a history of being heated to a temperature equal to or higher than the melting point thereof.

The endothermic peak (melting point) of a fluororesin composition herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). When two or more minimum points are present in one melting peak, the temperatures corresponding to the respective peaks are considered as endothermic peaks (melting points).

The fluororesin A described above can be used as the non-melt-flowable fluororesin having a history of being heated to a temperature equal to or higher than the melting point thereof.

The fluororesin A is preferably PTFE. The PTFE may be a high molecular weight PTFE.

The PTFE as a fluororesin A may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

Examples of the modifying monomer include the monomers described above for the modified PTFE as a fluororesin A in the first fluororesin composition of the disclosure. A preferred range of the amount of the modifying monomer unit is also the same as the range described for the first fluororesin composition of the disclosure.

Preferred ranges of the standard specific gravity (SSG) and melting point of the PTFE as the fluororesin A in the second fluororesin composition of the disclosure are the same as the respective ranges described for the first fluororesin composition of the disclosure.

The second fluororesin composition of the disclosure may contain particles of the fluororesin A. The particles of the fluororesin A may be secondary particles of the fluororesin A**.**

Preferred ranges of the average secondary particle size and D90 of the particles of the fluororesin A in the second fluororesin composition of the disclosure are the same as the respective ranges described for the first fluororesin composition of the disclosure. The particles of the fluororesin A in the second fluororesin composition of the disclosure can be obtained by the method described for the first fluororesin composition of the disclosure.

The second fluororesin composition is to generate a residue in an amount of 15% by mass or less of the fluororesin composition in pyrolysis at 600°C in a nitrogen atmosphere.

The residue generated from the second fluororesin composition of the disclosure in pyrolysis at 600°C in a nitrogen atmosphere is preferably in an amount of 10% by mass or less, more preferably 8% by mass or less of the fluororesin composition. The amount of the residue may be 1% by mass or more of the fluororesin composition.

The amount of the residue can be determined from the weight loss in the TG curve obtained by simultaneous thermogravimetric/differential thermal analysis (TG/DTA) at a temperature-increasing rate of 10°C/min at 600°C in a nitrogen atmosphere.

The second fluororesin composition of the disclosure exhibits electrical conductivity or thermal conductivity of 0.3 W/m·K or higher.

The phrase "exhibits electrical conductivity" herein means that the volume resistivity is 10⁵ Ω·cm or lower.

The second fluororesin composition of the disclosure preferably has a volume resistivity of 10⁴ Ω·cm or lower. In order to achieve further improved electrical conductivity, the volume resistivity is more preferably 10³ Ω·cm or lower, particularly preferably 10² Ω·cm or lower, even more preferably 10 Ω·cm or lower. The lower limit may be, for example, but is not limited to, 10⁻² Ω·cm.

The volume resistivity is measured in conformity with ASTM D991.

The second fluororesin composition of the disclosure preferably contains an electrically conductive filler. This can impart good electrical conductivity to the fluororesin composition of the disclosure.

Examples of the electrically conductive filler include the electrically conductive fillers described above for the first fluororesin composition of the disclosure. The electrically conductive filler is preferably a carbon filler, more preferably carbon black. In the case of the second fluororesin composition of the disclosure, even carbon black, which is comparatively inexpensive and has excellent handleability, can impart good electrical conductivity. The carbon black is preferably electrically conductive carbon black, and more preferably includes at least one selected from the group consisting of acetylene black, ketjen black, channel black, furnace black, lamp black, and thermal black, still more preferably at least one selected from the group consisting of acetylene black, ketjen black, and furnace black. A preferred range of the oil absorption of the carbon black is the same as the range described for the first fluororesin composition of the disclosure.

A preferred range of the amount of the electrically conductive filler is the same as the range described for the first fluororesin composition of the disclosure.

The second fluororesin composition of the disclosure preferably has a thermal conductivity of 0.4 W/m·K or higher, more preferably 0.5 W/m·K or higher, still more preferably 0.6 W/m·K or higher, further preferably 0.7 W/m·K or higher.

The thermal conductivity is measured as follows. A molded article is obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article is cut into a plate with dimensions of 2.0 mm thickness, 20 mm width, and 20 mm length. Using the resulting plate-shaped molded article, the thermal conductivity is measured in conformity with JIS H7903 in a room temperature atmosphere of 23°C under the conditions of a heater temperature of 42°C, a chiller temperature of 12°C, and a measurement load of 400 N**.**

The second fluororesin composition of the disclosure preferably contains a thermally conductive filler. This can impart good thermal conductivity to the second fluororesin composition of the disclosure.

Examples of the thermally conductive filler include the thermally conductive fillers described above for the first fluororesin composition of the disclosure. The thermally conductive filler preferably includes boron nitride. In the case of the second fluororesin composition of the disclosure, good thermal conductivity can be imparted.

A preferred range of the amount of the thermally conductive filler is the same as the range described for the first fluororesin composition of the disclosure.

The second fluororesin composition of the disclosure may further contain a fluororesin B including at least one selected from the group consisting of a melt-flowable fluororesin and a non-melt-flowable fluororesin having no history of being heated to a temperature equal to or higher than the melting point thereof. The second fluororesin composition containing the fluororesin B has better tensile properties. Examples of the fluororesin B include the fluororesin B described above for the first fluororesin composition of the disclosure. Preferred ranges of the amounts of the fluororesins A and B in the second fluororesin composition of the disclosure are the same as the respective ranges described for the first fluororesin composition of the disclosure.

The second fluororesin composition of the disclosure preferably has one or more endothermic peaks (melting points) within a range higher than 335°C and one or more endothermic peaks (melting points) within a range of 355°C or lower, more preferably one or more endothermic peaks (melting points) within a range of 350°C or lower.

The presence of the melting point in the temperature range indicates that the fluororesin composition further contains a fluororesin having an endothermic peak (melting point) within a range higher than 335°C, i.e., a non-melt-flowable fluororesin having no history of being heated to a temperature equal to or higher than the melting point thereof and/or a non-melt-flowable fluororesin including a portion having no history of being heated to a temperature equal to or higher than the melting point thereof.

The non-melt-flowable fluororesin having no history of being heated to a temperature equal to or higher than the melting point thereof used may be a non-melt-flowable fluororesin having no history of being heated to a temperature equal to or higher than the melting point thereof as the fluororesin B described for the first fluororesin composition of the disclosure, such as any of the fluororesins B2 to B4**.** A preferred range of the amount of the non-melt-flowable fluororesin having no history of being heated to a temperature equal to or higher than the melting point thereof is the same as the range described for the amount of the fluororesin B (or any of the fluororesins B2 to B4) in the first fluororesin composition of the disclosure.

The non-melt-flowable fluororesin including a portion having no history of being heated to a temperature equal to or higher than the melting point thereof used may be the fluororesin C described for the first fluororesin composition of the disclosure. A preferred range of the amount of the non-melt-flowable fluororesin including a portion having no history of being heated to a temperature equal to or higher than the melting point thereof is the same as the range described for the amount of the fluororesin C in the first fluororesin composition of the disclosure.

In order to achieve much improved tensile properties, the amount of the fluororesin having an endothermic peak (melting point) within a range higher than 335°C in the second fluororesin composition of the disclosure is preferably 0 to 90% by mass of the fluororesin composition. The amount is more preferably 1% by mass or more, still more preferably 10% by mass or more, further preferably 15% by mass or more, even more preferably 20% by mas or more, particularly preferably more than 20% by mass, more particularly preferably 25% by mass or more, further particularly preferably 30% by mass or more, even more particularly preferably 40% by mass or more, while more preferably 80% by mass or less, still more preferably 75% by mass or less, further preferably 70% by mass or less, even more preferably 65% by mass or less, particularly preferably 60% by mass or less, more particularly preferably 50% by mass or less.

The second fluororesin composition of the disclosure is non-melt-flowable.

A preferred range of the MFR of the second fluororesin composition of the disclosure is the same as the range described for the first fluororesin composition of the disclosure.

Alternatively, based on the thickness of a preformed article (non-fired molded article) prepared by compression-molding the second fluororesin composition of the disclosure and the thickness thereof after heating at a temperature equal to or higher than the melting point of the fluororesin composition for one hour or longer, the thickness after heating is preferably smaller than the thickness before heating by less than 20% or the thickness after heating is preferably greater than the thickness before heating because these cases means that the fluororesin composition is non-melt-flowable.

The second fluororesin composition of the disclosure preferably contains a TFE unit and a modifying monomer unit based on a modifying monomer copolymerizable with TFE. The fluororesin composition may consist only of a TFE unit and a modifying monomer unit as the polymerized units. A preferred range of the amount of the modifying monomer is the same as the range described for the first fluororesin composition of the disclosure.

The second fluororesin composition of the disclosure preferably contains the TFE unit in an amount of 99.0% by mass or more of all polymerized units.

The amounts of the respective polymerized units of the second fluororesin composition of the disclosure can be calculated by appropriate combination of NMR, FT-IR, elemental analysis, and X-ray fluorescence analysis in accordance with the types of the monomers. In the case where the composition of materials is known, the amounts may be calculated from the composition of materials.

In order to achieve much better handleability, the second fluororesin composition of the disclosure preferably has an apparent density of 0.40 g/ml or higher, more preferably 0.42 g/ml or higher, still more preferably 0.45 g/ml or higher, particularly preferably 0.47 g/ml or higher. The upper limit may be, but is not limited to, 1.00 g/ml.

The apparent density is determined in conformity with JIS K6891.

In order to achieve excellent flowability and much better handleability, the second fluororesin composition of the disclosure preferably has an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The second fluororesin composition of the disclosure preferably has an average secondary particle size of 5 to 700 µm. A preferred range of the average secondary particle size of the second fluororesin composition of the disclosure is the same as the range described for the first fluororesin composition of the disclosure.

The second fluororesin composition of the disclosure may be in any form, and is preferably in the form of powder.

The second fluororesin composition of the disclosure preferably has a tensile strength at break of 8 MPa or higher, more preferably 9 MPa or higher, still more preferably 10 MPa or higher, particularly preferably 13 MPa or higher. The upper limit thereof may be, but is not limited to, 20 MPa, for example.

The tensile strength at break is measured in conformity with ASTM D1708 using a dumbbell produced as in the case of the first fluororesin composition of the disclosure.

The second fluororesin composition of the disclosure may have a tensile strain at break of 75% or higher, preferably 150% or higher, more preferably 200% or higher, still more preferably 250% or higher, further preferably 300% or higher, even more preferably 360% or higher, particularly preferably 400% or higher. The upper limit thereof may be, but is not limited to, 600%, for example.

The tensile strain at break is measured in conformity with ASTM D1708 using a dumbbell produced as in the case of the first fluororesin composition of the disclosure.

The second fluororesin composition of the disclosure can suitably be used as a molding material. The fluororesin composition may be molded, for example, by compression molding, ram extrusion molding, or isostatic molding, although not limited thereto. Preferred among these are compression molding and ram extrusion molding, and more preferred is ram extrusion molding.

The second fluororesin composition of the disclosure is preferably in the form of a powder for compression molding or in the form of a powder for ram extrusion molding, more preferably in the form of a powder for ram extrusion molding.

The second fluororesin composition of the disclosure is preferably not used for porous matter.

The term "porous" herein means a state where the area occupied by voids of 10 µm or larger constitutes 20% or more per unit area observed in a cross section of a molded article.

The disclosure also provides a molded article (hereafter, also referred to as a second molded article of the disclosure) obtainable by ram extrusion molding the second fluororesin composition of the disclosure.

The second molded article of the disclosure has excellent tensile properties while containing a fluororesin having a history of being heated to a temperature equal to or higher than the melting point thereof or higher.

The ram extrusion molding can be performed by the above-described method.

The first and second molded articles of the disclosure each preferably have a tensile strength at break of 8 MPa or higher, more preferably 9 MPa or higher, still more preferably 10 MPa or higher, particularly preferably 13 MPa or higher. The upper limit thereof may be, but is not limited to, 20 MPa, for example.

The tensile strength at break is measured in conformity with ASTM D1708.

The first and second molded articles of the disclosure each may have a tensile strain at break of 75% or higher, preferably 150% or higher, more preferably 200% or higher, still more preferably 250% or higher, further preferably 300% or higher, even more preferably 360% or higher, particularly preferably 400% or higher. The upper limit thereof may be, but is not limited to, 600%, for example.

The tensile strain at break is measured in conformity with ASTM D1708.

The first and second molded articles of the disclosure each preferably have a volume resistivity of 10⁴ Ω·cm or lower. In order to achieve further improved electrical conductivity, the volume resistivity is more preferably 10³ Ω·cm or lower, particularly preferably 10² Ω·cm or lower, even more preferably 10 Ω·cm or lower. The lower limit may be, for example, but is not limited to, 10^{- 2} Ω·cm.

The volume resistivity is measured in conformity with ASTM D991.

For antistatic purposes, the first and second molded articles of the disclosure each preferably have a volume resistivity of 10⁵ to 10⁸ Ω·cm.

For the purpose of improving the thermal conductivity, the first and second molded articles of the disclosure each preferably have a thermal conductivity of **0.3** W/m K or higher. For further improvement of the thermal conductivity, the first and second molded articles of the disclosure each more preferably have a thermal conductivity of 0.5 W/m K or higher. The volume resistivity is measured in conformity with JIS H7903.

A molded article obtainable from the first or second fluororesin composition of the disclosure is preferably not porous.

The molded article obtainable from the first or second fluororesin composition can suitably be used for a lining sheet, packing, gasket, diaphragm valve, heat-resistant electric wire, heat-resistant insulating tape for vehicle motors or generators, release sheet, sealant, casing, sleeve, bellows, hose, piston ring, butterfly valve, rectangular tank, wafer carrier, circuit board, and the like

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### (Melting point)

The melting point was determined as the temperature corresponding to the local minimum on a heat-of-fusion curve obtained by differential scanning calorimetry (DSC) at a temperature-increasing rate of 10°C/min using X-DSC7000 available from Hitachi High-Tech Science Corp. In the case where one melting peak included two or more local minimums, each minimum was defined as a melting point.

In the case where the amount of the fluororesin B was 5% by mass or less, the melting point was determined as the temperature corresponding to the local minimum on a heat-of-fusion curve obtained by differential scanning calorimetry (DSC) after the sample was heated to 300°C, which is lower than the melting point of the fluororesin B, at a temperature-increasing rate of 10°C/min, maintained at 300°C for 10 minutes, and then heated at a temperature-increasing rate of 10°C/min, using X-DSC7000 available from Hitachi High-Tech Science Corp.

### (Residue)

The amount of the residue was determined from the weight loss in a TG curve obtained by simultaneous thermogravimetric/differential thermal analysis (TG/DTA) at a temperature-increasing rate of 10°C/min at 600°C in a nitrogen atmosphere using TG/DTA 7200 (Hitachi High-Tech Science Corp.).

### (Composition of monomers in fluororesin)

The composition was determined by ¹⁹F-NMR.

### (Composition of monomers in fluororesin composition)

The composition was determined by calculation based on the composition of materials.

### (Secondary particle size of powder)

The secondary particle size was determined based on the particle size distribution by volume determined in dry measurement using a laser diffraction particle size distribution analyzer (LS13 320) available from Beckman Coulter, Inc. at a vacuum pressure of 20 mH₂O. The average secondary particle size was defined as equivalent to the particle size corresponding to 50% of the cumulative volume in the particle size distribution. The particle size corresponding to 10% was defined as D10 and the particle size corresponding to 90% was defined as D90.

### (Average primary particle size)

The average primary particle size was determined as follows. Specifically, an aqueous dispersion adjusted to have a solid concentration of 0.5% by mass was dropped onto aluminum foil and dried at 150°C for one hour so that water was removed. The residue was then observed using a scanning electron microscope (SEM) and 100 or more particles were randomly selected. The average of the diameters of these particles was defined as the average primary particle size.

### (Aspect ratio)

The average aspect ratio was determined as follows. Specifically, an aqueous dispersion of the fluororesin diluted to have a solid concentration of 0.5% by mass was observed using a scanning electron microscope (SEM) and 100 or more particles randomly selected were imaged. The ratio of the major and minor axes of each particle was then obtained and the average thereof was defined as the average aspect ratio.

The proportion of the particles having an aspect ratio of 2.5 or higher was determined as follows. Specifically, an aqueous dispersion of the fluororesin diluted to have a solid concentration of 0.5% by mass was observed using a scanning electron microscope (SEM) and 100 or more particles randomly selected were imaged. The aspect ratio of each particle was then calculated and the proportion of the particles of interest was defined relative to the total number of the particles selected.

### (Solid concentration of aqueous dispersion)

The solid concentration (P% by mass) in the aqueous dispersion was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The solid concentration was determined by the formula: P = (Z/X) × 100 (% by mass).

### (Amount of nonionic surfactant in aqueous dispersion)

The amount (N% by mass) of the nonionic surfactant contained in the aqueous dispersion relative to the PTFE was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The amount was determined by the formula: N = [(Y-Z)/Z] × 100 (% by mass).

### (Apparent density)

The apparent density was determined in conformity with JIS K 6891.

### (Standard specific gravity (SSG))

The SSG was determined by the immersion method in conformity with ASTM D792 using a sample molded in conformity with ASTM D4895-89.

### (Angle of repose)

A funnel having a total height of 115 mm, a stem diameter of ϕ26 mm, a stem length of 35 mm, and an angle of mouth of 60° was placed such that the height of the bottom of the funnel was 100 mm from the surface where the sample was to be dropped. Then, 40 g of the sample was dropped through the funnel to form a cone of the sample dropped. The angle of the lower half of the cone was measured using a goniometer, which was defined as the angle of repose.

### (Maximum linear length)

Using a SEM image, 100 or more secondary particles were observed and the lengths of the respective secondary particles were measured. The largest length among these was defined as the maximum linear length.

### (MFR)

The MFR was determined in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE).

### (Tensile test)

The tensile test in Examples 1 to 6 was performed as follows. Specifically, 35 g of powder was put into a ϕ100 mm mold and compression-molded at a pressure of 30 MPa for one minute. The temperature was increased from room temperature to 300°C over three hours, then increased from 300°C to 370°C over four hours, then maintained at 370°C for 12 hours, then decreased to 300°C over five hours, and then decreased to room temperature over one hour, whereby the compression-molded article was fired into a molded article. The molded article was then cut into a dumbbell, which was subjected to the tensile test in conformity with ASTM D1708. Thereby, the tensile strength at break and the tensile strain at break were measured. In Examples 7 to 16, the tensile properties were measured by the following method in the case of using a ram extrusion molded article. A molded article was obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article was cut into a plate with dimensions of 2.0 mm thickness, 20 mm width, and 150 mm length. The resulting plate-shaped molded article was punched out to a dumbbell shape, which was used to perform the tensile test in conformity with ASTM D170 to measure the tensile strength at break and the tensile strain at break.

### (Melt flowability of fluororesin composition)

A fluororesin composition (powder) was compression-molded and fired under the same conditions as in the above tensile test. In the case where the thickness after firing was smaller than the thickness before firing by 20% or more, the fluororesin composition was determined as being melt-flowable. In the case where the thickness after firing was smaller than the thickness before firing by less than 20% or the thickness after firing was greater than the thickness before firing, the fluororesin composition was determined as being non-melt-flowable.

### (Volume resistivity)

In Example 7, a molded article was obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article was cut into a plate with dimensions of 2.0 mm thickness, 20 mm width, and 150 mm length. Using this plate-shaped molded article, the volume resistivity was measured in conformity with ASTM D991 under the conditions of a distance between voltage electrodes of 60 mm and a distance between current electrodes of 100 mm in an atmosphere of a room temperature of 23°C and a humidity of 50% using a digital ohmmeter R 506 (Kawaguchi Electric Works.). In Examples 8 to 14, using the plate prepared as above, the volume resistivity was measured in conformity with JIS K7194 in an atmosphere of a room temperature of 23°C and a humidity of 50% using Loresta-GX MCP-T700 (Mitsubishi Chemical Analytech Co., Ltd.).

### (Thermal conductivity)

A molded article was obtained by extrusion under the conditions of a filling length of 70 mm, a pressure of 10 MPa, a pressurization time of 20 seconds, and each cycle set to 40 seconds using a vertical ram extruder (cylinder diameter: ϕ27 mm, total length: 1300 mm) with setting temperatures of 270°C in the preheating zone and 370°C in the molding zone. The molded article was cut into a plate with dimensions of 2.0 mm thickness, 20 mm width, and 20 mm length. Using the resulting plate-shaped molded article, the thermal conductivity was measured in conformity with JIS H7903 in an atmosphere of a room temperature of 23°C under the conditions of a heater temperature of 42°C, a chiller temperature of 12°C, and a measurement load of 400 N using TCM1001 (Rhesca Co., Ltd.).

### (Non-porosity)

The fluororesin composition (powder) was ram extrusion molded under the same conditions as for the thermal conductivity to obtain a molded article. A cross section of the molded article was observed using an SEM image. The molded article was determined to be porous when the voids of 10 µm or larger occupied 20% or more of the area per unit. When the occupancy was lower than 20%, the molded article was determined to be "not porous", which is indicated with "o" in Table 1. Similarly, when the occupancy was 20% or higher, the molded article was determined to be "porous", which is indicated with "×" in Table 1.

### Synthesis Example 1 (synthesis of perfluoroether carboxylic acid ammonium salt A)

A 1-L autoclave was purged with nitrogen and charged with 16.5 g of dehydrated tetramethylurea and 220 g of diethylene glycol dimethyl ether, followed by cooling. Next, 38.5 g of carbonyl fluoride and then 100 g of hexafluoropropylene oxide were fed thereto, followed by stirring. Then, 38.5 g of carbonyl fluoride and 100 g of hexafluoropropylene oxide were again added thereto. The same amounts of carbonyl fluoride and hexafluoropropylene oxide were fed thereto. After the reaction was completed, a reaction liquid mixture was collected. The mixture was separated and the lower layer reaction product was obtained.

A 6-L autoclave was charged with 1000 mL of tetraglyme and CsF (75 g) and purged with nitrogen. The autoclave was cooled and charged with 2100 g of the reaction product obtained above. Hexafluoropropylene oxide was then introduced into the autoclave, so that the reaction was initiated. Finally, 1510 g of hexafluoropropylene oxide was fed thereto. The contents were collected and separated using a separating funnel into an upper layer and a lower layer. The upper layer weighed 1320 g and the lower layer weighed 3290 g. The lower layer was rectified for isolation.

Next, 1000 g of the isolated target was combined with 1000 g of pure water and hydrolyzed. The product was then separated using a separating funnel and the organic layer (lower layer) was collected. The collected solution was washed with sulfuric acid water. The resulting solution was further simply distilled for purification. The resulting purified compound was mixed with 76 g of a 28% by mass ammonia aqueous solution and 600 g of pure water to prepare an aqueous solution. To this aqueous solution was added dropwise 500 g of the product obtained by the above simple distillation. The dropwise addition was followed by addition of a 28% by mass ammonia aqueous solution, so that the pH was adjusted to 7. The product was freeze-dried, whereby a perfluoroether carboxylic acid ammonium salt A was obtained.

### Production Example 1 (production of fluororesin powder A-1)

A coarse powder of homo-PTFE obtained by suspension polymerization of a TFE monomer alone was pulverized using a pulverizer to provide a PTFE molding powder (standard specific gravity (SSG): 2.159, melting point: 345.0°C). Then, 35 g of this molding powder was compression-molded in a ϕ100-mm mold at 30 MPa for one minute and fired at 370°C for three hours. Thereby, a molded article was obtained. The resulting molded article was cut and pulverized using a pulverizer, whereby a fluororesin powder A-1 was obtained. The fluororesin powder A-1 had a melting point of 328°C, an average secondary particle size of 23 µm, a D10 of 8 µm, a D90 of 48 µm, an apparent density of 0.64 g/ml, and a maximum linear length of 94 µm.

### Production Example 2 (production of fluororesin powder A-2)

A molded article obtained as in Production Example 1 was cut and pulverized using a pulverizer, whereby a fluororesin powder A-2 was obtained. The fluororesin powder A-2 had a melting point of 328°C, an average secondary particle size of 148 µm, a D10 of 96 µm, a D90 of 212 µm, and an apparent density of 1.03 g/ml.

### Production Example 3 (production of fluororesin powder B-1)

A coarse powder of homo-PTFE obtained by suspension polymerization of a TFE monomer alone was pulverized using a pulverizer, whereby a fluororesin powder B-1 was obtained. The fluororesin powder B-1 had an apparent density of 0.34 g/ml, an average secondary particle size of 24 µm, a D90 of 55 µm, a standard specific gravity (SSG) of 2.163, a melting point of 345.0°C, and a maximum linear length of 112 µm.

### Production Example 4 (production of fluororesin powder B-2)

A coarse powder of modified PTFE obtained by suspension polymerization of TFE and perfluoropropyl vinyl ether (PPVE) was pulverized using a pulverizer, whereby a fluororesin powder B-2 was obtained. The fluororesin powder B-2 had an apparent density of 0.33 g/ml, an average secondary particle size of 28 µm, a D90 of 77 µm, a standard specific gravity (SSG) of 2.168, a melting point of 341.5°C, a PPVE unit content of 0.09% by mass, and a maximum linear length of 156 µm.

### Production Example 5 (production of fluororesin powder B-3)

In a 6-L capacity stainless steel autoclave equipped with a stirring blade, an aqueous dispersion of a modified PTFE containing a TFE unit and a perfluoro(propyl vinyl ether) (PPVE) unit was obtained by a known emulsion polymerization method using the perfluoroether carboxylic acid ammonium salt A. The resulting aqueous dispersion was subjected to coagulation and drying by known techniques, whereby a fluororesin powder B-3 was obtained.

The resulting fluororesin powder B-3 had an apparent density of 0.46 g/ml, an average secondary particle size of 460 µm, a standard specific gravity (SSG) of 2.169, a melting point of 334.6°C, a PPVE unit content of 0.14% by mass, and a maximum linear length of 1379 µm.

### Production Example 6 (production of fluororesin powder B-4)

In a 6-L capacity stainless steel autoclave equipped with a stirring blade, a PFA aqueous dispersion containing PFA particles including a TFE unit and a perfluoro(propyl vinyl ether) (PPVE) unit was obtained by a known emulsion polymerization method using the perfluoroether carboxylic acid ammonium salt A. The resulting PFA aqueous dispersion was subjected to coagulation, whereby a fluororesin powder B-4 was obtained. The resulting fluororesin powder B-4 had an average secondary particle size of 1.5 µm, a MFR of 28 g/10 min, a melting point of 314°C, a PPVE unit content of 1.4 mol%, and a maximum linear length of 27 µm.

### Production Example 7 (production of fluororesin powder B-6)

A coarse powder of homo-PTFE obtained by suspension polymerization of a TFE monomer alone was pulverized using a pulverizer, whereby a fluororesin powder B-6 was obtained. The fluororesin powder B-6 had an apparent density of 0.39 g/ml, an average secondary particle size of 31 µm, a D90 of 204 um, a melting point of 343°C, and a maximum linear length of 307 µm.

Carbon blacks and boron nitride used in examples are listed below.
Carbon black 1: BET specific surface area 225 m²/g, DBP oil absorption 105 cc/100 g, average primary particle size 16 nm
Carbon black 2: BET specific surface area 214 m²/g, DBP oil absorption 175 cc/100 g, average primary particle size 37 nm
Boron nitride: BET specific surface area 5.0 m²/g, tap density 0.3 g/cm³

### Example 1

Using Wonder Crusher WC-3, 40 g of the fluororesin powder A-1, 45 g of the fluororesin powder B-2, and 15 g of glass fiber (PF E-001 available from Nitto Boseki Co., Ltd.) were mixed at a rotational frequency of 6900 rpm for 60 seconds, whereby a PTFE powder (fluororesin composition) was obtained. The resulting PTFE powder had an apparent density of 0.45 g/ml and an angle of repose of 34°, and thus had excellent handleability. The PTFE powder contained the TFE unit and the PPVE unit in amounts of respectively 99.959% by mass and 0.041% by mass of all polymerized units. The PTFE powder had melting points of 329°C and 342°C, a tensile strength at break of 15 MPa, and a tensile strain at break of 342%. The properties of the resulting PTFE powder are shown in Table 1.

### Example 2

A PTFE powder was obtained as in Example 1 except that 35 g of the fluororesin powder A-1, 40 g of the fluororesin powder B-2, 10 g of the fluororesin powder B-4, and 15 g of glass fiber (PF E-001 available from Nitto Boseki Co., Ltd.) were used. The resulting PTFE powder had an apparent density of 0.48 g/ml and an angle of repose of 38°, and thus had excellent handleability. The PTFE powder contained the TFE unit and the PPVE unit in amounts of respectively 99.604% by mass and 0.396% by mass of all polymerized units. The PTFE powder had melting points of 315°C, 329°C, and 342°C, a tensile strength at break of 16 MPa, and a tensile strain at break of 365%. The properties of the resulting PTFE powder are shown in Table 1.

### Example 3

A PTFE powder was obtained as in Example 1 except that 40 g of the fluororesin powder A-1, 35 g of the fluororesin powder B-1, 10 g of the fluororesin powder B-4, and 15 g of glass fiber (PF E-001 available from Nitto Boseki Co., Ltd.) were used. The resulting PTFE powder had an apparent density of 0.44 g/ml and an angle of repose of 38°, and thus had excellent handleability. The PTFE powder contained the TFE unit and the PPVE unit in amounts of respectively 99.641% by mass and 0.359% by mass of all polymerized units. The PTFE powder had melting points of 315°C, 329°C, and 345°C, a tensile strength at break of 16 MPa, and a tensile strain at break of 401%. The properties of the resulting PTFE powder are shown in Table 1.

### Example 4

A PTFE powder was obtained as in Example 1 except that 40 g of the fluororesin powder A-1, 40 g of the fluororesin powder B-2, 15 g of glass fiber (PF E-001 available from Nitto Boseki Co., Ltd.), and 5 g of graphite (CPB available from Nippon Graphite Industries, Co., Ltd.) were used. The resulting PTFE powder had an apparent density of 0.49 g/ml and an angle of repose of 38°, and thus had excellent handleability. The PTFE powder contained the TFE unit and the PPVE unit in amounts of respectively 99.964% by mass and 0.036% by mass of all polymerized units. The PTFE powder had melting points of 329°C and 342°C, a tensile strength at break of 9 MPa, and a tensile strain at break of 80%. The properties of the resulting PTFE powder are shown in Table 1.

### Example 5

A PTFE powder was obtained as in Example 1 except that 40 g of the fluororesin powder A-1, 45 g of the fluororesin powder B-2, and 15 g of bronze powder (Bro-AT-200 available from Fukuda Metal Foil & Powder Co. Ltd.) were used. The resulting PTFE powder had an apparent density of 0.53 g/ml and an angle of repose of 34°, and thus had excellent handleability. The PTFE powder contained the TFE unit and the PPVE unit in amounts of respectively 99.959% by mass and 0.041% by mass of all polymerized units. The PTFE powder had melting points of 329°C and 342°C, a tensile strength at break of 14 MPa, and a tensile strain at break of 364%. The properties of the resulting PTFE powder are shown in Table 1.

### Example 6

A PTFE powder was obtained as in Example 1 except that 45 g of the fluororesin powder A-1, 40 g of the fluororesin powder B-3, and 15 g of glass fiber (PF E-001 available from Nitto Boseki Co., Ltd.) were used and the rotation frequency was set to 2900 rpm. The resulting PTFE powder had an apparent density of 0.43 g/ml and an angle of repose of 35°, and thus had excellent handleability. The PTFE powder contained the TFE unit and the PPVE unit in amounts of respectively 99.944% by mass and 0.056% by mass of all polymerized units. The PTFE powder had melting points of 329°C and 336°C, a tensile strength at break of 11 MPa, and a tensile strain at break of 283%. The properties of the resulting PTFE powder are shown in Table 1.

### Example 7

A PTFE powder was obtained as in Example 1 except that 65 g of the fluororesin powder A-2, 25 g of the fluororesin powder B-6, and 10 g of the carbon black 1 were used. The resulting PTFE powder had an apparent density of 0.43 g/ml and an angle of repose of 23°, and thus had excellent handleability. The PTFE powder had melting points of 327°C and 343°C, a tensile strength at break of 11 MPa, a tensile strain at break of 26%, and a volume resistivity of 1.4 Ω·cm. The amount of the residue resulting from pyrolysis at 600°C in a nitrogen atmosphere was 9.1% by mass. The properties of the resulting PTFE powder are shown in Table 1.

### Example 8

A PTFE powder was obtained as in Example 1 except that 72 g of the fluororesin powder A-2, 25 g of the fluororesin powder B-6, and 3 g of the carbon black 1 were used. The resulting PTFE powder had an apparent density of 0.54 g/ml and an angle of repose of 21°, and thus had excellent handleability. The PTFE powder had melting points of 327°C and 343°C, a tensile strength at break of 14 MPa, a tensile strain at break of 55%, and a volume resistivity of 8.0 Ω·cm. The amount of the residue resulting from pyrolysis at 600°C in a nitrogen atmosphere was 5.4% by mass. The properties of the resulting PTFE powder are shown in Table 1.

### Example 9

A PTFE powder was obtained as in Example 1 except that 20 g of the fluororesin powder A-2, 70 g of the fluororesin powder B-6, and 10 g of the carbon black 2 were used. The resulting PTFE powder had an apparent density of 0.48 g/ml and an angle of repose of 20°, and thus had excellent handleability. The PTFE powder had melting points of 327°C and 343°C, a tensile strength at break of 14 MPa, a tensile strain at break of 158%, and a volume resistivity of 1.6 Ω·cm. The amount of the residue resulting from pyrolysis at 600°C in a nitrogen atmosphere was 11.9% by mass. The properties of the resulting PTFE powder are shown in Table 1.

### Example 10

A PTFE powder was obtained as in Example 1 except that 40 g of the fluororesin powder A-2, 50 g of the fluororesin powder B-6, and 10 g of the carbon black 1 were used. The resulting PTFE powder had an apparent density of 0.43 g/ml and an angle of repose of 34°, and thus had excellent handleability. The PTFE powder had melting points of 327°C and 343°C, a tensile strength at break of 10 MPa, a tensile strain at break of 17%, and a volume resistivity of 5.1 Ω·cm. The amount of the residue resulting from pyrolysis at 600°C in a nitrogen atmosphere was 9.8% by mass. The properties of the resulting PTFE powder are shown in Table 1.

### Example 11

A PTFE powder was obtained as in Example 1 except that 40 g of the fluororesin powder A-2, 45 g of the fluororesin powder B-6, and 15 g of the carbon black 2 were used. The resulting PTFE powder had an apparent density of 0.34 g/ml and an angle of repose of 28°, and thus had excellent handleability. The PTFE powder had melting points of 327°C and 343°C, a tensile strength at break of 10 MPa, a tensile strain at break of 16%, and a volume resistivity of 0.6 Ω·cm. The amount of the residue resulting from pyrolysis at 600°C in a nitrogen atmosphere was 16.8% by mass. The properties of the resulting PTFE powder are shown in Table 1.

### Example 12

A PTFE powder was obtained as in Example 1 except that 70 g of the fluororesin powder A-2, 25 g of the fluororesin powder B-6, and 5 g of the carbon black 2 were used. The resulting PTFE powder had an apparent density of 0.46 g/ml and an angle of repose of 29°, and thus had excellent handleability. The PTFE powder had melting points of 327°C and 343°C, a tensile strength at break of 17 MPa, a tensile strain at break of 140%, and a volume resistivity of 3.1 Ω·cm. The amount of the residue resulting from pyrolysis at 600°C in a nitrogen atmosphere was 7.4% by mass. The properties of the resulting PTFE powder are shown in Table 1.

### Example 13

A PTFE powder was obtained as in Example 1 except that 74 g of the fluororesin powder A-2, 25 g of the fluororesin powder B-6, and 1 g of the carbon black 1 were used. The resulting PTFE powder had an apparent density of 0.60 g/ml and an angle of repose of 22°, and thus had excellent handleability. The PTFE powder had melting points of 327°C and 343°C, a tensile strength at break of 17 MPa, a tensile strain at break of 167%, and a volume resistivity of 2.0 × 10² Ω·cm. The amount of the residue resulting from pyrolysis at 600°C in a nitrogen atmosphere was 8.1% by mass. The properties of the resulting PTFE powder are shown in Table 1.

### Example 14

A PTFE powder was obtained as in Example 1 except that 69 g of the fluororesin powder A-2, 3 g of the fluororesin powder B-4, 25 g of the fluororesin powder B-6, and 3 g of the carbon black 2 were used. The resulting PTFE powder had an apparent density of 0.51 g/ml and an angle of repose of 26°, and thus had excellent handleability. The PTFE powder contained the TFE unit and the PPVE unit in amounts of respectively 99.8923% by mass and 0.1077% by mass of all polymerized units. The PTFE powder had melting points of 315°C, 327°C, and 343°C, a tensile strength at break of 18 MPa, a tensile strain at break of 211%, and a volume resistivity of 9.2 Ω·cm. The amount of the residue resulting from pyrolysis at 600°C in a nitrogen atmosphere was 4.8% by mass. The properties of the resulting PTFE powder are shown in Table 1.

### Example 15

A PTFE powder was obtained as in Example 1 except that 65 g of the fluororesin powder A-2, 25 g of the fluororesin powder B-6, and 10 g of the boron nitride were used. The resulting PTFE powder had an apparent density of 0.56 g/ml and an angle of repose of 30°, and thus had excellent handleability. The PTFE powder had melting points of 327°C and 343°C, a tensile strength at break of 10 MPa, a tensile strain at break of 42%, and a thermal conductivity of 0.72 W/m·K. The amount of the residue resulting from pyrolysis at 600°C in a nitrogen atmosphere was 13.9% by mass. The properties of the resulting PTFE powder are shown in Table 1.

### Example 16

A PTFE powder was obtained as in Example 1 except that 72 g of the fluororesin powder A-2, 25 g of the fluororesin powder B-6, and 3 g of the boron nitride were used. The resulting PTFE powder had an apparent density of 0.72 g/ml and an angle of repose of 31°, and thus had excellent handleability. The PTFE powder had melting points of 327°C and 343°C, a tensile strength at break of 15 MPa, a tensile strain at break of 154%, and a thermal conductivity of 0.32 W/m·K. The amount of the residue resulting from pyrolysis at 600°C in a nitrogen atmosphere was 10.9% by mass. The properties of the resulting PTFE powder are shown in Table 1.

### Comparative Example 1

A PTFE powder was obtained as in Example 1 except that 85 g of the fluororesin powder A-1 and 15 g of glass fiber (PF E-001 available from Nitto Boseki Co., Ltd.) were used. The resulting PTFE powder had an apparent density of 0.62 g/ml and an angle of repose of 44°, and thus had poor handleability. The PTFE powder contained the TFE unit in an amount of 100% by mass of all polymerized units. The PTFE powder had a melting point of 329°C, a tensile strength at break of 6 MPa, and a tensile strain at break of 71%. The properties of the resulting PTFE powder are shown in Table 1.

### Comparative Example 2

A PTFE powder was obtained as in Example 1 except that 85 g of the fluororesin powder A-1 and 15 g of graphite (CPB available from Nippon Graphite Industries, Co., Ltd.) were used. The resulting PTFE powder had an apparent density of 0.37 g/ml and an angle of repose of 43°, and thus had poor handleability. The PTFE powder contained the TFE unit in an amount of 100% by mass of all polymerized units. The PTFE powder had a melting point of 329°C, a tensile strength at break of 7 MPa, and a tensile strain at break of 17%. The properties of the resulting PTFE powder are shown in Table 1.

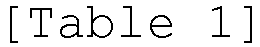

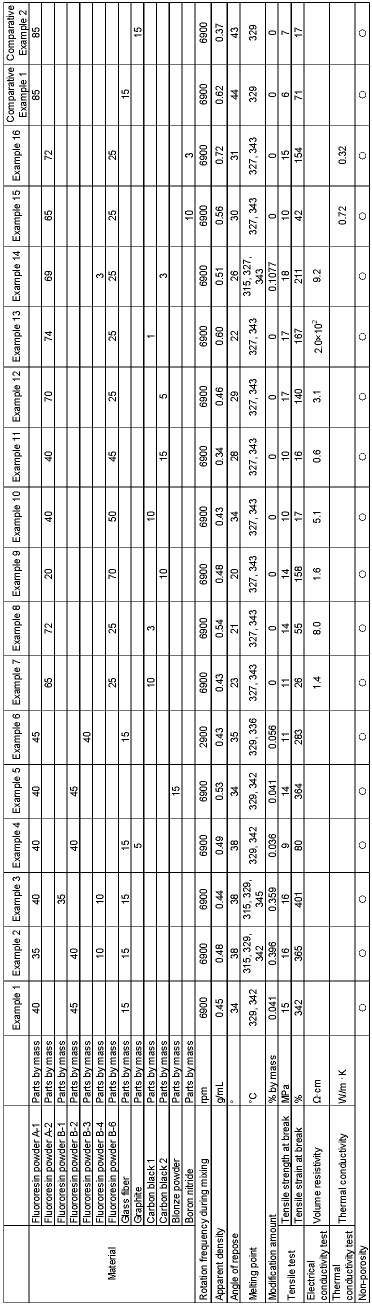

## Claims

1. A non-melt-flowable fluororesin composition comprising:
a non-melt-flowable fluororesin A having a history of being heated to a temperature equal to or higher than a melting point thereof;
a fluororesin B including at least one selected from the group consisting of a melt-flowable fluororesin and a non-melt-flowable fluororesin having no history of being heated to a temperature equal to or higher than a melting point thereof; and
a filler.

2. The fluororesin composition according to claim 1,
wherein the fluororesin composition has one or more melting points within a temperature range lower than 333°C and one or more melting points within a temperature range from 333°C to 360°C.

3. The fluororesin composition according to claim 1 or **2,**
wherein the fluororesin composition contains a tetrafluoroethylene unit and a modifying monomer unit based on a modifying monomer copolymerizable with tetrafluoroethylene.

4. The fluororesin composition according to claim **3,**
wherein the modifying monomer unit is present in an amount of 1.0% by mass or less of all polymerized units of the fluororesin composition.

5. The fluororesin composition according to any one of claims 1 to 4,
wherein the fluororesin A includes polytetrafluoroethylene.

6. The fluororesin composition according to any one of claims 1 to 5,
wherein the melt-flowable fluororesin has a melt flow rate of 0.25 g/10 min or higher.

7. The fluororesin composition according to any one of claims 1 to 6,
wherein the melt-flowable fluororesin includes a fluororesin having a melting point of 320°C or lower.

8. The fluororesin composition according to any one of claims 1 to 7, further comprising a non-melt-flowable fluororesin C including a portion having no history of being heated to a temperature equal to or higher than a melting point thereof,
wherein the fluororesin B includes the melt-flowable fluororesin.

9. The fluororesin composition according to any one of claims 1 to 8,
wherein the fluororesin composition has an apparent density of 0.40 g/ml or higher.

10. The fluororesin composition according to any one of claims 1 to 9,
wherein the fluororesin composition has an angle of repose of smaller than 40°.

11. The fluororesin composition according to any one of claims 1 to 10,
wherein the fluororesin composition has an average secondary particle size of 5 to 700 µm.

12. The fluororesin composition according to any one of claims 1 to 11,
wherein particles of the fluororesin A have a smaller maximum linear length than particles of the fluororesin B.

13. The fluororesin composition according to any one of claims 1 to 12,
wherein the filler includes at least one selected from the group consisting of glass fiber, glass bead, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

14. The fluororesin composition according to any one of claims 1 to 13,
wherein the filler includes an electrically conductive filler.

15. The fluororesin composition according to claim 14,
wherein the electrically conductive filler includes carbon black.

16. The fluororesin composition according to any one of claims 1 to 15, which is in the form of powder.

17. The fluororesin composition according to any one of claims 1 to 16, which is in the form of powder for compression molding or powder for ram extrusion molding.

18. The fluororesin composition according to any one of claims 1 to 17,
wherein the fluororesin composition has a tensile strength at break of 8 MPa or higher.

19. A molded article obtainable by compression-molding and firing, or ram extrusion molding the fluororesin composition according to any one of claims 1 to 18.

20. A fluororesin composition having one or more endothermic peaks within a range from 320°C to 335°C,
wherein the fluororesin composition is to generate a residue in an amount of 15% by mass or less of the fluororesin composition in pyrolysis at 600°C in a nitrogen atmosphere, and
the fluororesin composition exhibits electrical conductivity or a thermal conductivity of 0.3 W/m·K or higher.

21. The fluororesin composition according to claim 20, further having one or more endothermic peaks within a range higher than 335°C.

22. The fluororesin composition according to claim 20 or 21, further comprising an electrically conductive filler or a thermally conductive filler.

23. The fluororesin composition according to any one of claims 20 to 22,
wherein the fluororesin composition has a volume resistivity of 10⁴ Ω·cm or lower.

24. The fluororesin composition according to any one of claims 20 to 23,
wherein the fluororesin composition has an apparent density of 0.40 g/ml or higher.

25. The fluororesin composition according to any one of claims 20 to 24,
wherein the fluororesin composition has an angle of repose of smaller than 40°.

26. The fluororesin composition according to any one of claims 20 to 25, which is in the form of powder for ram extrusion molding.

27. The fluororesin composition according to any one of claims 20 to 26,
wherein the fluororesin composition has a tensile strength at break of 8 MPa or higher.

28. The fluororesin composition according to any one of claims 1 to 18 and 20 to 27, which is not used for porous matter.
